# EUROPEAN PATENT APPLICATION

(11) **EP 4 782 343 A1**
(43) Date of publication of application: **29.07.2026**
(21) Application number: 24953407.4
(22) Date of filing: 06.09.2024
(51) Int. Cl.: B64U 20/87

(54) **UNMANNED AERIAL VEHICLE AND PANORAMIC PHOTOGRAPHY AERIAL VEHICLE**

(71) Applicant: Arashi Vision Inc., Shenzhen, Guangdong 518101 (CN); Antigravity (SZ) Technology Co., Ltd, Shenzhen, Guangdong Province 518100 (CN)
(72) Inventor: ZHANG, Lei, Shenzhen, Guangdong 518101 (CN); KONG, Yongliang, Shenzhen, Guangdong 518101 (CN); KANG, Weihua, Shenzhen, Guangdong 518101 (CN)
(74) Representative: Michalski Hüttermann & Partner mbB
(86) International application number: PCT/CN2024/117521
(87) International publication number: WO 2026/051017

(57) **Abstract**

The present disclosure relates to the technical field of aircraft, and particularly relates to an unmanned aerial vehicle (UAV) and a panoramic imaging aircraft. The UAV has a yaw axis. The UAV includes a body, a propulsion device, and a panoramic module. The body includes a main body and a foldable arm, the foldable arm is connected to the main body, and the foldable arm is configured to move relative to the main body to be in an unfolded state or a folded state. The propulsion device is disposed on the foldable arm, and the propulsion device is configured to provide thrust for the UAV to fly. The panoramic module is disposed on the body, the panoramic module includes a first fisheye lens and a second fisheye lens, the first fisheye lens and the second fisheye lens are respectively disposed on two opposite sides of the body, the field of view of the first fisheye lens is greater than 180°, and the field of view of the second fisheye lens is greater than 180°; a virtual connection line of the optical centers of the first fisheye lens and the second fisheye lens forms a first axis, and the first axis intersects with the yaw axis. The overall size of the above UAV is relatively small.

## Description

### Technical Field

The present disclosure relates to the technical field of aircraft, and particularly relates to an unmanned aerial vehicle and a panoramic imaging aircraft.

### Background

Currently, in order to capture panoramic aerial images, it is common to provide fisheye lenses at the top and bottom of an unmanned aerial vehicle (UAV) to capture panoramic images. Due to the large field of view of fisheye lenses, other structures of the UAV are likely to enter the field of view of the fisheye lens during shooting, which affects the quality of the panoramic image. Therefore, in order to keep other structures of the UAV outside the field of view of the fisheye lens during shooting, the top fisheye lens and the bottom fisheye lens are generally arranged to protrude from the body of the UAV, so as to increase the fusion angle for image stitching. Although the protruding arrangement of the lenses can achieve a better field of view, it increases the stitching radius between the field of view of the top fisheye lens and the field of view of the bottom fisheye lens, and increases the overall size of the UAV.

### Summary

The present disclosure provides an unmanned aerial vehicle (UAV) and a panoramic imaging aircraft.

In a first aspect, the present disclosure provides a UAV, the UAV having a yaw axis, and the UAV includes a body, a propulsion device, and a panoramic module. The body includes a main body and a foldable arm, the foldable arm is connected to the main body, and the foldable arm can move relative to the main body to be in an unfolded state or a folded state. The propulsion device is provided on the foldable arm, and the propulsion device is configured to provide thrust for the UAV to fly. The panoramic module is provided on the body, the panoramic module includes a first fisheye lens and a second fisheye lens. The first fisheye lens and the second fisheye lens are respectively provided on two opposite sides of the body. The field of view of the first fisheye lens is greater than 180°, and the field of view of the second fisheye lens is greater than 180°. A virtual connection line of the optical centers of the first fisheye lens and the second fisheye lens forms a first axis, and the first axis intersects with the yaw axis.

In a second aspect, the present disclosure further provides a panoramic imaging aircraft, the panoramic imaging aircraft having a yaw axis, and the panoramic imaging aircraft includes a body, a propulsion device, a bracket, and an image acquisition device. The propulsion device is provided on the body, and the propulsion device is configured to provide thrust for the panoramic imaging aircraft to fly. The bracket is connected to the body. The image acquisition device includes a panoramic module and a binocular obstacle avoidance module. The panoramic module and the binocular obstacle avoidance module are both provided on the bracket. The panoramic module includes a first fisheye lens and a second fisheye lens. The first fisheye lens and the second fisheye lens are respectively located on two sides of the body away from each other, and there is an overlap between the field of view ranges of the first fisheye lens and the second fisheye lens for acquiring a panoramic image. The binocular obstacle avoidance module includes a first front camera and a second front camera. The first front camera and the second front camera are both provided on the bracket, and the first front camera and the second front camera are arranged along the yaw axis.

In a third aspect, the present disclosure further provides a UAV, including a body, a propulsion device, a bracket, and a panoramic module. The propulsion device is provided on the body, and the propulsion device is configured to provide thrust for the UAV to fly. The bracket is connected to the body. The panoramic module includes a first fisheye lens and a second fisheye lens. The first fisheye lens and the second fisheye lens are respectively connected to the bracket and are connected to the body through the bracket. A virtual connection line of the optical centers of the first fisheye lens and the second fisheye lens forms a first axis, and the first axis intersects with the yaw axis.

### Brief Description of Drawings

In order to more clearly illustrate the technical solutions of the present disclosure, a brief introduction to the drawings required for the implementations is provided below. It is obvious that the drawings described below are only some implementations of the present disclosure, and those of ordinary skill in the art can also obtain other drawings based on these drawings without creative efforts.
FIG. 1 is a schematic diagram of a simplified structure of an unmanned aerial vehicle provided in an implementation of the present disclosure.

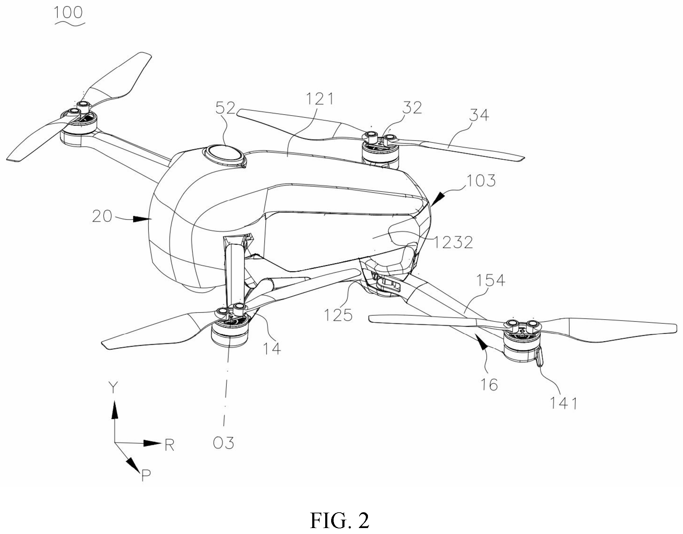

FIG. 2 is a schematic diagram of a simplified structure of the UAV shown in FIG. 1.
FIG. 3 is a schematic diagram of the overall structure of the UAV shown in FIG. 1.
FIG. 4 is a schematic diagram of the structure of the UAV shown in FIG. 3 in a storage state.
FIG. 5 is a simplified schematic diagram of the reference plane and support plane of the UAV shown in FIG. 3 in a hovering state.
FIG. 6 is a simplified schematic diagram of the reference plane and support plane of the UAV shown in FIG. 3 in a ready-to-fly state.
FIG. 7 is a simplified schematic diagram of the reference plane of the UAV shown in FIG. 3.
FIG. 8 is a simplified schematic diagram of the support plane of the UAV shown in FIG. 3.
FIG. 9 is an exploded schematic diagram of the internal structure of the body of the UAV shown in FIG. 3.
FIG. 10 is an exploded schematic diagram of a partial structure of the UAV shown in FIG. 9.
FIG. 11 is a schematic diagram illustrating the first plane and the horizontal plane of the UAV shown in FIG. 3.
FIG. 12 is an exploded schematic diagram of the lower shell and the second obstacle avoidance module of the UAV shown in FIG. 3.
FIG. 13 is a schematic diagram of another view of the exploded structure of the lower shell and the second obstacle avoidance module shown in FIG. 12.
FIG. 14 is a simplified schematic diagram of one implementation of the fill light of the UAV shown in FIG. 12.
FIG. 15 is a simplified schematic diagram of another implementation of the fill light of the UAV shown in FIG. 12.
FIG. 16 is a schematic diagram of one implementation of the support portion of the UAV shown in FIG. 3.
FIG. 17 is a schematic diagram of another implementation of the support portion of the UAV shown in FIG. 3.
FIG. 18 is a schematic diagram of the overall structure of the UAV shown in FIG. 3 from another view.
FIG. 19 is a schematic diagram for characterizing the thrust center of the UAV shown in FIG. 3.
FIG. 20 is a schematic diagram of the structure of the bracket and the image display device of the UAV shown in FIG. 3.
FIG. 21 is an exploded schematic diagram of the bracket shown in FIG. 20.
FIG. 22 is a schematic diagram of the field of view of the image display device of the UAV shown in FIG. 3.
FIG. 23 is a simplified schematic diagram of the field of views of the image display device shown in FIG. 22.
FIG. 24 is a schematic diagram of the structure of the UAV shown in FIG. 3 in a storage state from another point of view.
FIG. 25 is a schematic diagram of the overall structure of a panoramic imaging aircraft provided in an implementation of the present disclosure.
FIG. 26 is a schematic diagram of the overall structure of a UAV provided in an implementation of the present disclosure.

### Reference Numerals:

100, unmanned aerial vehicle; 10, body; 101, nose end; 103, tail end; 12, main body; 121, upper shell; 123, middle frame; 1232, main shell portion; 1233, second shock-absorbing mounting hole; 1234, second shock-absorbing mounting portion; 1235, supporting shell portion; 124, receiving space; 125, lower shell; 1251, first relief hole; 1252, second positioning portion; 1253, positioning post; 1254, second relief hole; 1255, first protrusion; 1256, third relief hole; 1257, second protrusion; 1258, third protrusion; 13, foldable landing gear; 132, landing gear drive mechanism; 134, landing gear; 1341, connecting end; 1343, free end; 14, support portion; 141, movable support portion; 143, fixed support portion; 15, foldable arm; 152, arm drive mechanism; 154, arm; 1541, fourth protrusion; 1542, left front arm; 1544, right front arm; 1546, left rear arm; 1548, right rear arm; 16, movable member; 17, shock-absorbing assembly; 172, first shock-absorbing ball; 18, second obstacle avoidance module; 181, mounting base; 1812, first positioning portion; 1813, positioning hole; 1814, buffer gap; 1815, relief notch; 1816, fill light mounting hole; 183, obstacle avoidance module; 1832, first downward camera; 1834, second downward camera; 185, distance measurement module; 1852, transmitter; 1854, receiver; 1856, second circuit board; 187, buffer member; 20, bracket; 21, mounting main body; 211, first mounting hole; 2121, heat conduction portion; 2123, heat dissipation fin; 2141, lens mounting portion; 2143, shock-absorbing connection portion; 23, shock-absorbing member; 232, second shock-absorbing ball; 25, connecting frame; 251, second mounting hole; 252, mounting seat; 2521, main mounting plate; 2523, side plate; 254, mounting portion; 256, heat dissipation gap; 27, protective shell; 29, front shell; 30, propulsion device; 32, driving member; 34, propeller; 342, left front rotor; 344, right front rotor; 346, left rear rotor; 348, right rear rotor; 40, indicator light; 41, first light-emitting region; 43, second light-emitting region; 50, image acquisition device; 52, panoramic module; 521, first fisheye lens; 5212, first convex lens; 523, second fisheye lens; 5232, second convex lens; 54, first obstacle avoidance module; 541, first front camera; 543, second front camera; 60, sensor module; 61, first circuit board; 612, first shock-absorbing mounting portion; 613, first shock-absorbing mounting hole; 62, IMU; 63, GPS; 70, electronic speed controller; 80, battery; 81, reflective film; 90, main board; 110, fill light; 1101, fill light mounting hole; 1103, lens; 1104, incident surface; 1105, exit surface; 120, magnetometer; 200, panoramic imaging aircraft; 10, body; 50, image acquisition device; 30, propulsion device; 52, panoramic module; 521, first fisheye lens; 523, second fisheye lens; 20, bracket; 54, binocular obstacle avoidance module; 541, first front camera; 543, second front camera; 300, panoramic imaging aircraft; 10, body; 52, panoramic module; 521, first fisheye lens; 523, second fisheye lens; 30, propulsion device; and 20, bracket.

### Detailed Description

In order to enable those skilled in the art to better understand the solutions of the present disclosure, the following will provide a clear and complete description of the technical solutions in the implementations of the present disclosure with reference to the drawings in the implementations. Obviously, the implementations described are only a part of the implementations of the present disclosure, and not all implementations. Based on the implementations in the present disclosure, all other implementations obtained by those skilled in the art without creative efforts shall fall within the scope of protection of the present disclosure.

If certain terms are used in the specification and claims to refer to specific components, those skilled in the art should understand that hardware manufacturers may use different terms to refer to the same component. The specification and claims do not distinguish components by the difference in names, but by the difference in functions. The term "include" as used throughout the specification and claims is an open term and should be interpreted as "including but not limited to"; "substantially" means that those skilled in the art can solve technical problems within a certain error range and basically achieve the technical effect.

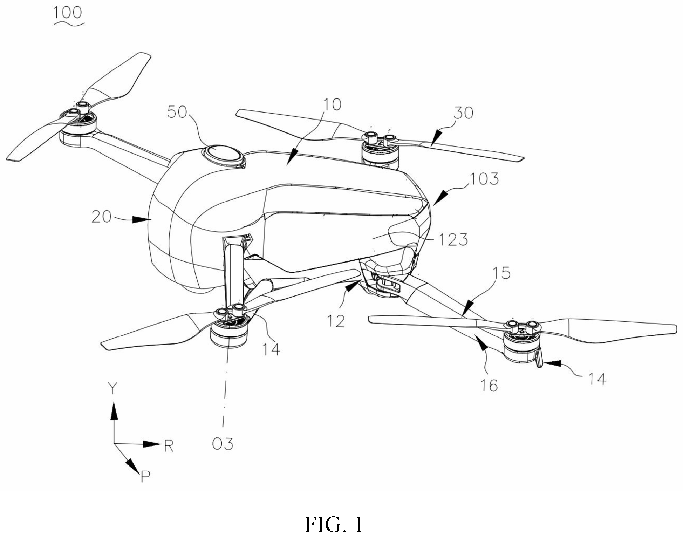

Please refer to FIG. 1. The present disclosure provides an unmanned aerial vehicle (UAV) 100, which can protect the lens while achieving panoramic imaging. The present specification does not limit the specific type of the UAV 100. For example, the UAV 100 can be a fixed-wing unmanned aircraft, a vertical take-off and landing unmanned aircraft, an unmanned airship, a multi-rotor UAV, an unmanned paramotor, etc. In this implementation, the UAV 100 is a multi-rotor UAV.

Please also refer to FIG. 1, FIG. 3, and FIG. 4. In this implementation, the UAV 100 can include a body 10, a propulsion device 30, and an image acquisition device 50. The body 10 can include a main body 12 and at least three support portions 14, where the at least three support portions 14 are spaced apart from each other and are respectively connected to the main body 12. At least one of the at least three support portions 14 is a movable support portion 141, and the movable support portion 141 can move relative to the main body 12 to be in a first position or a second position. The propulsion device 30 is connected to the main body 12 and is configured to provide thrust for the UAV 100 to fly, so that the UAV 100 has a flight state and a parked state. The image acquisition device 50 is provided on the main body 12, and the image acquisition device 50 can include a first fisheye lens 521 and a second fisheye lens 523. The first fisheye lens 521 and the second fisheye lens 523 are respectively provided on two sides of the main body 12. In the flight state, the second fisheye lens 523 is located on the side of the main body 12 facing downward. It should be noted that, in the specification of the present disclosure, the positional terms such as "upper," "lower," etc. for the UAV 100 should be understood based on the orientation of the UAV 100 itself. Taking the flight state of the UAV 100 as an example (including forward flight state or hovering state), the UAV 100 has a nose and a tail, and the direction of forward flight is the front of the nose, which is referred to as "front" in the present specification; "lower" in the present specification refers to the side facing downward when the UAV 100 is in the flight state, for example, when the UAV 100 is flying over land, the "side facing downward" is the "side facing the ground," or when the UAV 100 is flying over water, the "side facing downward" is the "side facing the water surface"; similarly, based on the above "front" orientation, the terms "left" and "right" should be understood as the left and right sides of the UAV 100.

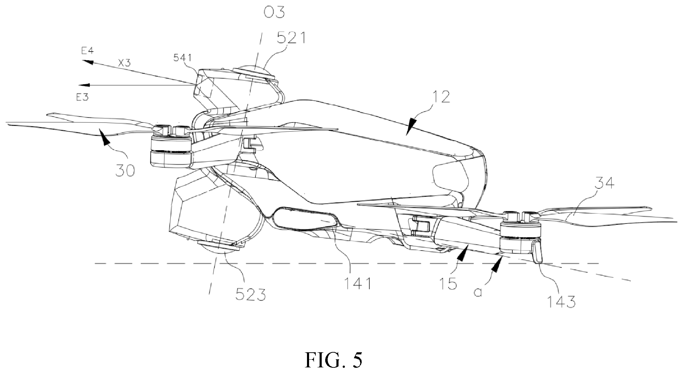

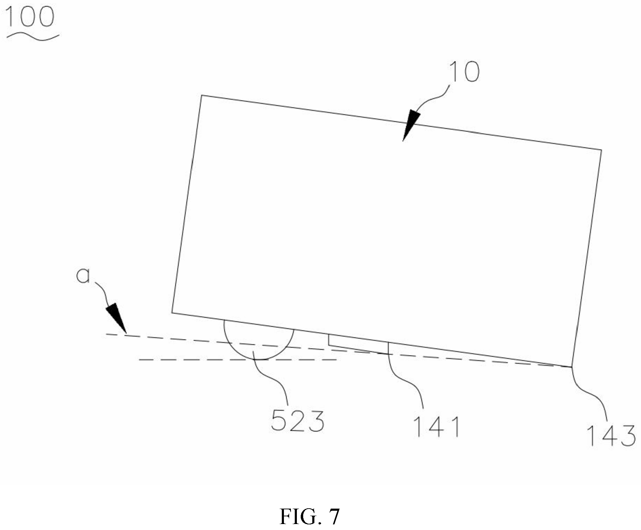

Specifically, in this implementation, the second fisheye lens 523 is located on the side of the main body 12 facing the ground. Please also refer to FIG. 5, FIG. 6, FIG. 7, and FIG. 8. When the movable support portion 141 is in the first position, the at least three support portions 14 together define a reference plane a, and the reference plane a is higher than the lowest point of the second fisheye lens 523 (as shown in FIG. 7). Here, the "lowest point of the second fisheye lens 523" is understood as the lowest spatial position of the second fisheye lens 523 in this state. For example, the second fisheye lens 523 has a convex lens, and the highest point of the convex surface of the convex lens can be understood as the lowest point of the second fisheye lens 523.

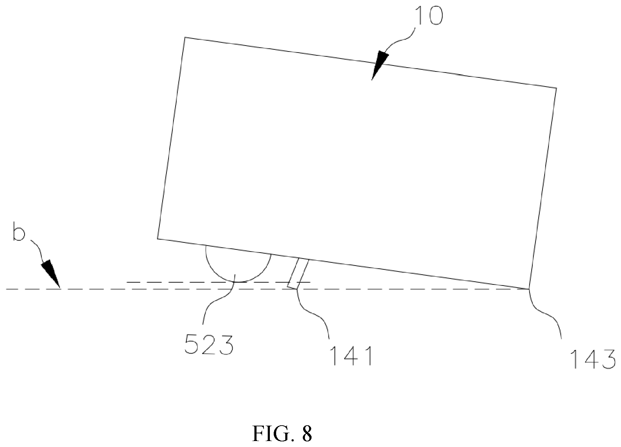

When the movable support portion 141 is in the second position, the at least three support portions 14 together define a support plane b, and the support plane b is located on the side of the second fisheye lens 523 away from the first fisheye lens 521 (as shown in FIG. 8).

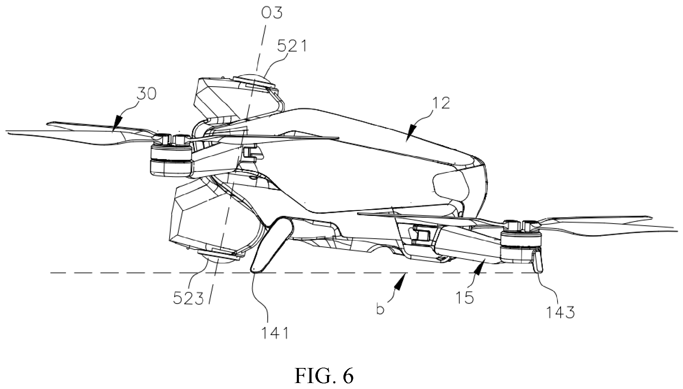

The flight state of the UAV 100 is understood as the state in which the UAV 100 is suspended in the air under the action of the propulsion device 30, which can include flight postures such as forward flight state, hovering state (as shown in FIG. 5), etc. The parked state of the UAV 100 can be understood as the state in which the UAV 100 is stationary and placed on a plane, which can include a parked state waiting for takeoff, a landed state waiting for storage (as shown in FIG. 6), a storage state, etc. When the movable support portion 141 is in the first position, the UAV 100 can be in the flight state or the parked state; when the movable support portion 141 is in the second position, the UAV 100 can be in the flight state or the parked state. As an example, the UAV 100 in the parked state can be placed on a designated platform, such as on the ground or a table, etc. At this time, when the movable support portion 141 is in the second position, the support plane b can substantially coincide with the planar ground or table, etc. At this time, the at least three support portions 14 are used together to support the UAV 100. The support plane b is located on the side of the second fisheye lens 523 away from the first fisheye lens 521, so that the support plane b is below the second fisheye lens 523.

Therefore, in this implementation, when the UAV 100 is in use, the propulsion device 30 provides thrust for the UAV 100 to fly, so that the UAV 100 is in the flight state. The first fisheye lens 521 and the second fisheye lens 523 are respectively provided on two sides of the main body 12, that is, on the top and bottom of the main body 12, and the first fisheye lens 521 and the second fisheye lens 523 are configured to acquire panoramic images. When the UAV 100 is in the flight state, the movable support portion 141 can be in the first position. At this time, the at least three support portions 14 together define the reference plane a, and the reference plane a is higher than the lowest point of the second fisheye lens 523, thereby reducing the possibility of the three support portions 14 entering the field of view of the second fisheye lens 523. When the UAV 100 switches to the parked state, when the movable support portion 141 is in the second position, the at least three support portions 14 together define the support plane b, and the support plane b is located on the side of the second fisheye lens 523 away from the first fisheye lens 521. When the UAV 100 is placed on a placement plane, the support plane b defined by the at least three support portions 14 can coincide with the placement plane, and the second fisheye lens 523 is located above the support plane b, that is, the second fisheye lens 523 will not contact the placement plane or be damaged by collision.

Therefore, in the UAV 100 provided in this implementation, when the movable support portion 141 is in the first position, panoramic images can be acquired in the flight state, and when the movable support portion 141 is in the second position, the second fisheye lens 523 can be protected when the UAV 100 is placed on the placement plane, reducing the possibility of the second fisheye lens 523 being damaged by contact or collision with the placement plane, thereby improving the service life of the second fisheye lens 523.

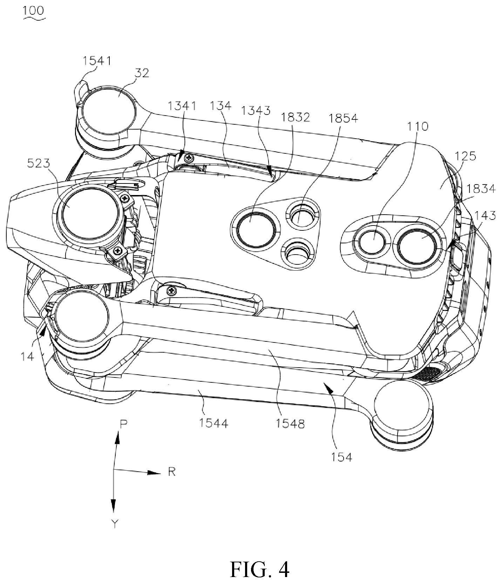

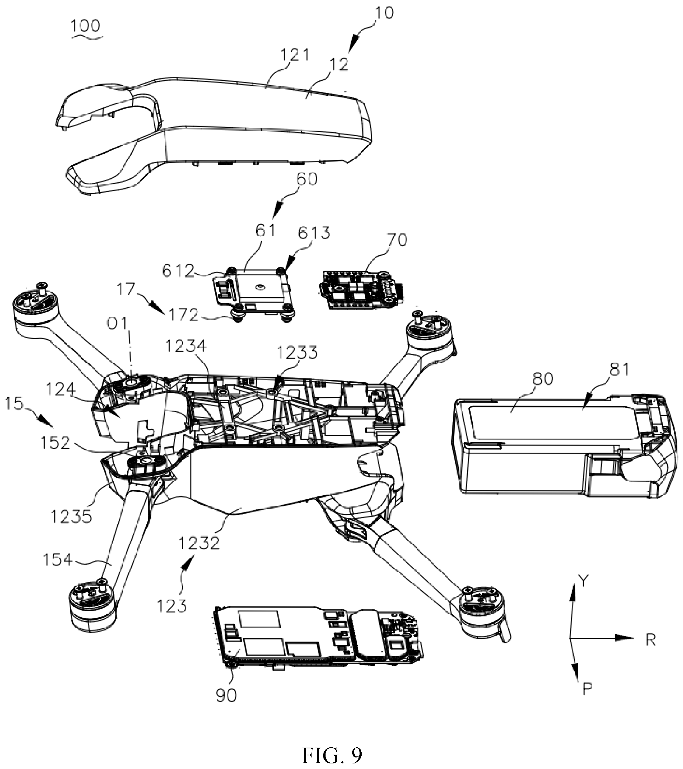

Please also refer to FIG. 4 and FIG. 9. In this implementation, the main body 12 can include an upper shell 121, a middle frame 123, and a lower shell 125. The middle frame 123 is connected between the upper shell 121 and the lower shell 125. The upper shell 121, the middle frame 123, and the lower shell 125 together define an installation space for installing internal components of the UAV 100.

For ease of understanding, taking the UAV 100 in the hovering state as an example, the upper shell 121 is located on the side of the UAV 100 facing upward, and the lower shell 125 is located on the side of the UAV 100 facing downward. The terms "upper," "lower," etc. indicating orientation or positional relationships are based on the orientation or positional relationships shown in the drawings, and are only for convenience of description and simplification, and do not indicate or imply that the device or component referred to must have a specific orientation.

The UAV 100 further includes a sensor module 60, which is connected to the middle frame 123. The sensor module 60 at least includes an inertial measurement unit (IMU) 62 and a global positioning system (GPS) 63. The IMU 62 determines the spatial attitude of the object by measuring acceleration and angular velocity, and the GPS 63 determines the position information of the object by receiving satellite signals.

In this implementation, the sensor module 60 can further include a first circuit board 61, the IMU 62 and the GPS 63 are both provided on the first circuit board 61, and the first circuit board 61 is mounted on the middle frame 123. The IMU 62 and the GPS 63 can be connected to the first circuit board 61 by soldering. The IMU 62 and the GPS 63 share one first circuit board 61, the structure is simple, and the overall weight of the UAV can be relatively light. The first circuit board 61 can be directly connected to the middle frame 123, or can be indirectly connected to the middle frame 123 through other structures. In this implementation, the first circuit board 61 is provided with a first shock-absorbing mounting portion 612, and the middle frame 123 is provided with a second shock-absorbing mounting portion 1234. The body 10 further includes a shock-absorbing assembly 17, one side of the shock-absorbing assembly 17 is provided on the first shock-absorbing mounting portion 612, and the other side is provided on the second shock-absorbing mounting portion 1234. The GPS 63 and the IMU 62 are modularly provided on the first circuit board 61, and the first circuit board 61 is connected to the middle frame 123 through the shock-absorbing assembly 17. On the one hand, the installation stability of the sensor module 60 is improved, the influence of vibration from other structures of the UAV 100 on the sensor module 60 is reduced, and the accuracy of the sensor module 60 in measuring attitude and position information is improved; on the other hand, there is no need to use an additional dedicated bracket for installing the GPS/IMU, thereby reducing the size and weight of the whole machine and simplifying the installation steps; moreover, both the IMU 62 and the GPS 63 are provided on the first circuit board 61, and the antenna of the GPS 63 can be used as a counterweight for the IMU 62 to reduce the vibration of the IMU 62.

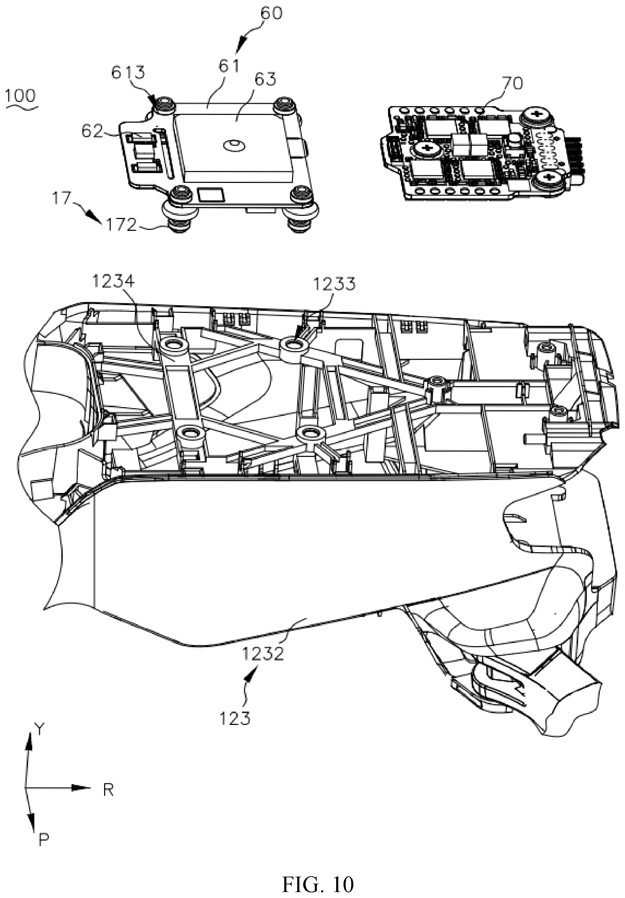

The present specification does not limit the specific structure of the shock-absorbing assembly 17. For example, the shock-absorbing assembly 17 can include at least one of a shock-absorbing ball, a shock-absorbing washer, a shock-absorbing sleeve, etc. In this implementation, the shock-absorbing assembly 17 includes a plurality of first shock-absorbing balls 172. Please refer to FIG. 10. The first shock-absorbing mounting portion 612 is provided with a plurality of first shock-absorbing mounting holes 613, and the plurality of first shock-absorbing balls 172 and the plurality of first shock-absorbing mounting holes 613 are provided in a one-to-one correspondence. The second shock-absorbing mounting portion 1234 is provided with a plurality of second shock-absorbing mounting holes 1233, and the plurality of first shock-absorbing balls 172 and the plurality of second shock-absorbing mounting holes 1233 are provided in a one-to-one correspondence. Both sides of each first shock-absorbing ball 172 are respectively embedded in the corresponding first shock-absorbing mounting hole 613 and the corresponding second shock-absorbing mounting hole 1233, and connect the first circuit board 61 and the middle frame 123, so that the first circuit board 61 can be connected to the middle frame 123 through the first shock-absorbing balls 172. The first shock-absorbing balls 172 are directly connected to the middle frame 123, and there is no need to add a separate bracket, which reduces the overall weight of the UAV 100 and also improves the strength of the connection structure of the body 10.

In this implementation, the first shock-absorbing mounting portion 612 is a plate body at the edge of the first circuit board 61, and the plurality of first shock-absorbing mounting holes 613 are provided at the edge of the first circuit board 61 and are sequentially spaced along the circumferential direction of the first circuit board 61. As an example, the number of first shock-absorbing mounting holes 613 is set to four, and the four first shock-absorbing mounting holes 613 are respectively provided at the four corners of the first circuit board 61, and the first shock-absorbing mounting holes 613 substantially penetrate the first circuit board 61 along the direction of the yaw axis Y of the UAV 100.

The middle frame 123 can include a main shell portion 1232 and the above-mentioned second shock-absorbing mounting portion 1234. The main shell portion 1232 is one of the frame structures for installing the UAV 100, and the second shock-absorbing mounting portion 1234 is connected to the inner wall of the middle frame 123. The second shock-absorbing mounting portion 1234 is substantially in the form of a beam, and the number of second shock-absorbing mounting portions 1234 is set to a plurality, and the plurality of second shock-absorbing mounting portions 1234 are staggered inside the main shell portion 1232 and are located on the side of the sensor module 60 away from the upper shell 121 to support the sensor module 60. The second shock-absorbing mounting holes 1233 are provided on the second shock-absorbing mounting portion 1234 and penetrate the second shock-absorbing mounting portion 1234 along the direction of the yaw axis Y of the UAV 100. As an example, the number of second shock-absorbing mounting holes 1233 is set to four, and the four second shock-absorbing mounting holes 1233 are respectively provided in a one-to-one correspondence with the four first shock-absorbing mounting holes 613. Both sides of the first shock-absorbing ball 172 are respectively inserted into the first shock-absorbing mounting hole 613 and the second shock-absorbing mounting hole 1233.

In this implementation, the UAV 100 can further include an electronic speed controller 70, which is connected to the middle frame 123, and the electronic speed controller 70 and the sensor module 60 are spaced apart along the roll axis R of the UAV 100. The sensor module 60 is substantially located in the middle of the body 10, and the electronic speed controller 70 is close to the tail end 103. The electronic speed controller 70 is configured to finely adjust the input voltage of the propulsion device 30, thereby controlling the rotational speed and thrust of the propeller of the propulsion device 30.

The UAV 100 further includes a battery 80, which is provided inside the middle frame 123 and connected to the middle frame 123. When the UAV 100 is in the flight state, the battery 80 is located below the sensor module 60, and the battery 80 is electrically connected to the sensor module 60. Specifically, the battery 80 is electrically connected to the electronic speed controller 70 and supplies power to the first circuit board 61 through the electronic speed controller 70. The battery 80 is provided on the side of the second shock-absorbing mounting portion 1234 away from the sensor module 60, and the second shock-absorbing mounting portion 1234 can provide good constraint for the battery 80 and support for the sensor module 60. Specifically, in this implementation, a battery compartment can be provided inside the middle frame 123 for installing the battery 80, and the battery compartment is located below the second shock-absorbing mounting portion 1234. For ease of maintenance and replacement, in this implementation, the battery 80 is detachably provided in the battery compartment. For example, the battery 80 can be connected to the middle frame 123 through a snap-fit structure. Furthermore, an active cover or installation opening can be provided near the tail end 103 of the middle frame 123, so that the battery 80 can be installed and removed from the active cover or installation opening.

A reflective film 81 for reflecting electromagnetic signals is provided on the side of the battery 80 facing the sensor module 60, and the reflective surface of the reflective film 81 is spaced opposite to the GPS 63. The reflective film 81 is configured to reflect electromagnetic signals, improve the signal strength of the GPS 63, and thus improve positioning accuracy. In this implementation, the reflective film 81 can be a metal dielectric reflective film. For example, the reflective film 81 can include a metal film and a dielectric layer, and the dielectric layer is provided on the outer side of the metal film (that is, the side of the metal film away from the battery 80). The material of the metal film can include at least one of aluminum, gold, silver, and copper, and the material of the dielectric layer can include at least one of silicon monoxide, magnesium fluoride, silicon dioxide, and aluminum oxide.

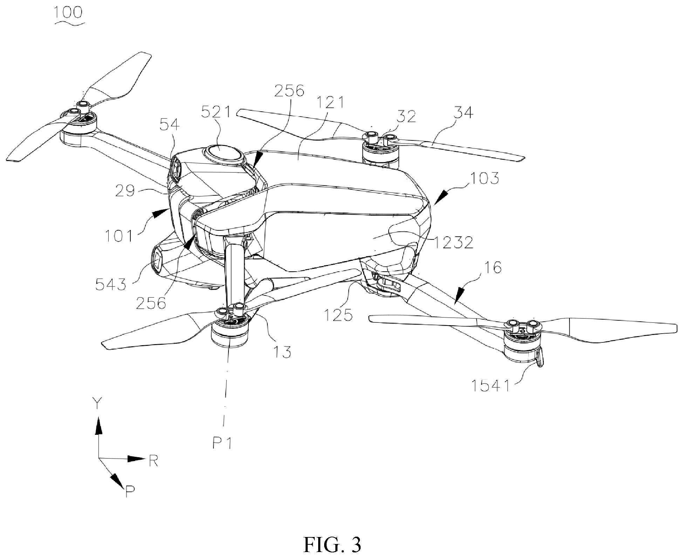

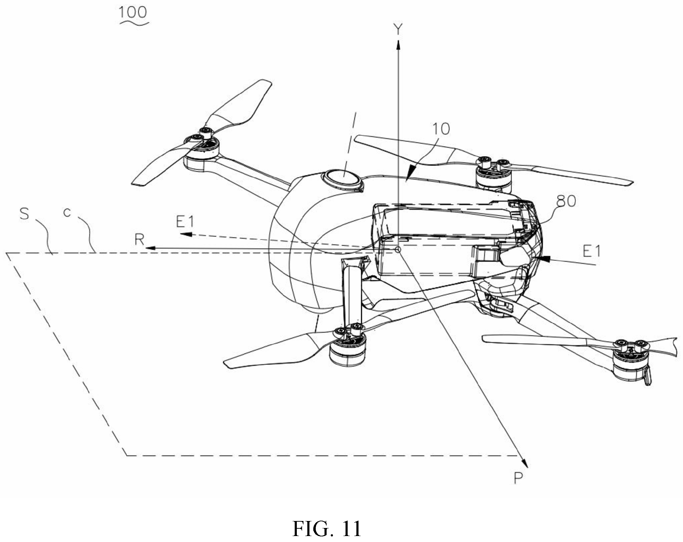

The pitch axis P and the roll axis R of the UAV 100 together define a first plane c. In this implementation, when the UAV 100 is in the hovering state, please refer to FIG. 11, the first plane c is parallel to the horizontal plane S. The battery 80 has a length direction E1, and the length direction E1 intersects or is parallel to the first plane c. For example, the battery 80 is substantially prismatic, for example, substantially cuboid, and its length direction can be understood as the extension direction of the longer edge (longer ridge). The end of the body 10 at the front in the forward flight direction E2 of the UAV 100 is defined as the nose end 101 (as shown in FIG. 3), and the end at the rear is defined as the tail end 103. When the UAV 100 is in the hovering state, the nose end 101 is slightly raised, and the battery 80 is also in a raised state with the whole machine; when the UAV 100 is in forward flight, the body 10 tends to tilt forward, and the nose end 101 will be slightly downward. The battery 80 is set in an inclined state in the normal state (for example, raised when hovering), so that when the body 10 tilts forward, the battery 80 changes its position relative to the horizontal plane S with the body 10. At this time, the battery 80 can be considered to be relatively flat (for example, the length direction E1 is set along the horizontal plane S, for example, parallel to the horizontal plane S), so the space occupied by the body 10 as a whole or the battery 80 as a whole in the vertical direction is also relatively small, reducing the possibility of the battery 80 falling into the field of view of the image acquisition device 50 in the forward flight state.

In some implementations, the length direction E1 intersects the first plane c, and the included angle between the length direction E1 and the first plane c falls within any one of the following angle ranges: [0°, 3°], [3°, 6°], [6°, 10°], [10°, 20°], [20°, 35°]. For example, the angle of the second included angle B can be 1°, 2°, 3°, 4°, 5°, 6°, 7°, 8°, 9°, 10°, 15°, 20°, 23°, 35°, etc. As an example, when the UAV 100 is in the hovering state, the above-mentioned first plane c, horizontal plane S, and length direction E1 are constructed based on the same specified point, and the side of the length direction E1 relatively close to the front of the nose is located above the horizontal plane S, so that the battery 80 is in a raised state. It should be understood that, when constructing the above-mentioned planes and directions, the above-mentioned first plane c, horizontal plane S, and length direction E1 all pass through the specified point, which can be a virtual point or based on a specific physical structure on the UAV 100 (for example, the specified point is a vertex of the battery 80).

Please refer again to FIG. 9 and FIG. 11. In this implementation, the UAV 100 further includes a main board 90, which is connected to the middle frame 123 and is located on the side of the battery 80 away from the sensor module 60, and the main board 90 is electrically connected to the battery 80. When the UAV 100 is in the flight state, the main board 90, the battery 80, and the sensor module 60 are arranged in sequence from bottom to top inside the body 10. The sensor module 60, the battery 80, and the main board 90 are stacked in sequence inside the body 10 of the UAV 100, improving the compactness of the internal structure and thereby reducing the overall size of the whole machine.

In some implementations, the image processing system, flight control system, and image transmission system of the UAV 100 can be provided on the main board 90. The plane where the main board 90 is located intersects the first plane c. For example, the main board 90 is substantially rectangular plate-shaped, and the plane where it is located can be understood as the plane where its larger area is located. The included angle between the plane where the main board 90 is located and the first plane c falls within any one of the following angle ranges: (0°, 3°], [3°, 6°], [6°, 10°], [10°, 20°], [20°, 35°]. For example, the angle of the included angle between the plane where the main board 90 is located and the first plane c can be 1°, 2°, 3°, 4°, 5°, 6°, 7°, 8°, 9°, 10°, 15°, 20°, 23°, 35°, etc. As an example, when the UAV 100 is in the hovering state, the above-mentioned first plane c, horizontal plane S, and the plane where the main board 90 is located are constructed based on the same specified point, the plane where the main board 90 is located is located above the horizontal plane S on the side relatively close to the front of the nose, so that the main board 90 is in a raised state. It should be understood that, when constructing the above-mentioned planes and directions, the above-mentioned first plane c, horizontal plane S, and the plane where the main board 90 is located all pass through the specified point, which can be a virtual point or based on a specific physical structure on the UAV 100 (for example, the specified point is a vertex of the main board 90).

Therefore, in some implementations of the present disclosure, the main board 90, the battery 80, and the sensor module 60 are all arranged in an inclined manner, and the main board 90 and the battery 80 are substantially parallel to each other, which can meet the requirement of not falling into the field of view of the first fisheye lens 521 and the second fisheye lens 523 with a smaller volume, reducing the overall size of the UAV 100.

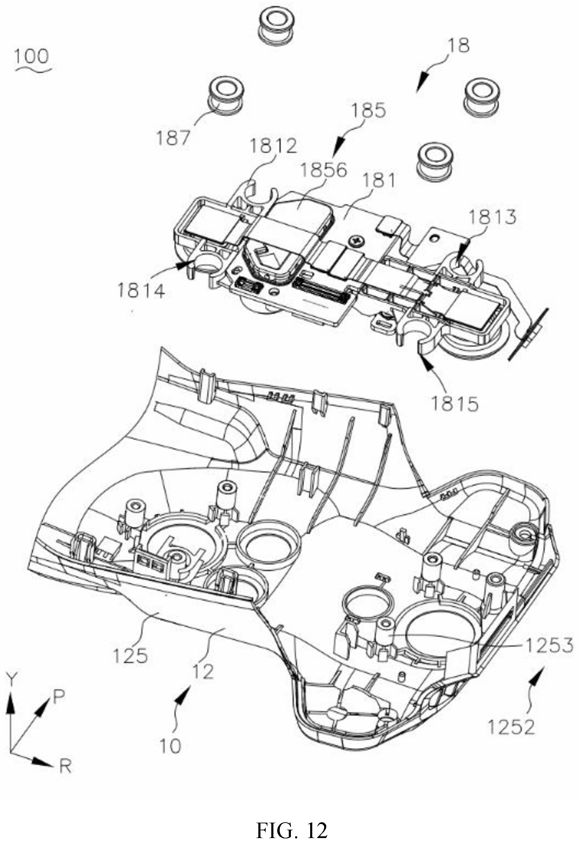

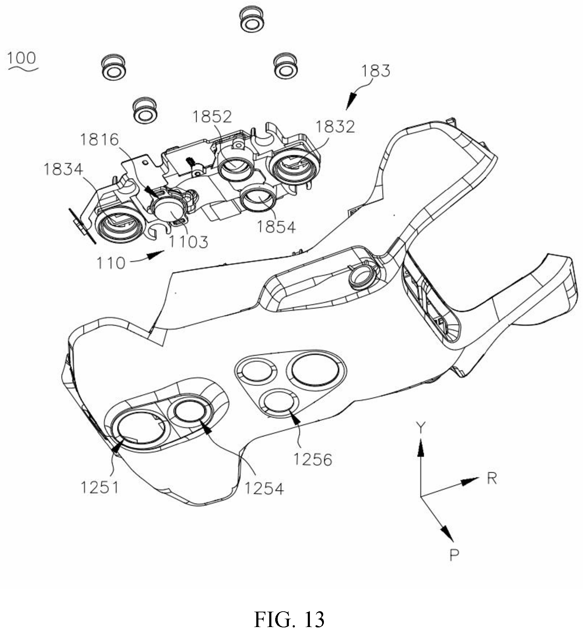

Please also refer to FIG. 12 and FIG. 13. In this implementation, the UAV 100 can further include a second obstacle avoidance module 18, which is connected to the body 10 and is used for environment recognition and obstacle avoidance. When the UAV 100 is in the hovering state, the second obstacle avoidance module 18 is provided on the side of the body 10 facing downward.

The second obstacle avoidance module 18 can include a mounting base 181, an obstacle avoidance module 183, and a distance measurement (Time of Flight, TOF) module 185. The mounting base 181 is connected to the body 10, and the obstacle avoidance module 183 and the distance measurement module 185 are both provided on the mounting base 181. The obstacle avoidance module 183 and the distance measurement module 185 share one mounting base 181, the installation structure is simple, and the overall weight of the UAV 100 is reduced.

Specifically, in this implementation, the second obstacle avoidance module 18 is provided inside the lower shell 125, and the mounting base 181 is connected to the lower shell 125. The mounting base 181 is provided with a first positioning portion 1812, and the body 10 is provided with a second positioning portion 1252. The second positioning portion 1252 is limited within the first positioning portion 1812. The mounting base 181 is substantially plate-shaped, and the second positioning portion 1252 is provided on the lower shell 125. The present specification does not limit the specific structure of the first positioning portion 1812 and the second positioning portion 1252. For example, the first positioning portion 1812 can include a positioning hole, a positioning slot, and the second positioning portion 1252 can include a positioning post, a positioning pin, etc. corresponding to the positioning hole or positioning slot. In this implementation, one of the first positioning portion 1812 and the second positioning portion 1252 is a positioning hole 1813 provided on the mounting base 181, and the other is a positioning post 1253 protruding from the body 10, and the positioning post 1253 is inserted into the positioning hole 1813.

When the first positioning portion 1812 is a positioning hole 1813 provided on the mounting base 181, the first positioning portion 1812 substantially penetrates the mounting base 181 along the yaw axis Y. The number of first positioning portions 1812 is set to a plurality, and the plurality of first positioning portions 1812 are sequentially arranged at intervals along the circumferential direction of the mounting base 181. The second positioning portion 1252 is a positioning post 1253 integrally formed (for example, by injection molding) on the lower shell 125, and the positioning post protrudes relative to the inner wall of the lower shell 125. When the mounting base 181 is mounted on the lower shell 125, the second positioning portion 1252 is embedded in the first positioning portion 1812.

In this implementation, the second obstacle avoidance module 18 further includes a buffer member 187, which is configured to be provided between the mounting base 181 and the lower shell 125 to achieve a shock-absorbing effect for the second obstacle avoidance module 18 on the mounting base 181. As an example, when the positioning post 1253 is inserted into the positioning hole 1813, there is a buffer gap 1814 between the positioning post 1253 and the hole wall of the positioning hole 1813, and the buffer member 187 is sleeved on the positioning post 1253 and is located in the buffer gap 1814 to buffer the vibration of the lower shell 125 during the flight of the UAV 100. In some implementations, the hole wall of the positioning hole 1813 is provided with a relief notch 1815, so that the first positioning portion 1812 is substantially in a non-closed ring structure, and the relief notch 1815 communicates with the buffer gap 1814 to expose the side wall of the buffer member 187. The buffer member 187 enables a flexible connection between the mounting base 181 and the lower shell 125, reducing the impact of vibration of the lower shell 125 during the flight of the UAV 100 on the second obstacle avoidance module 18.

Therefore, in this implementation, the inner diameter of the positioning hole 1813 is greater than the outer diameter of the positioning post 1253. When the positioning post 1253 is inserted into the positioning hole 1813, there is the above-mentioned buffer gap 1814 between the inner wall of the positioning hole 1813 and the outer wall of the positioning post 1253, and the centers of the positioning hole 1813 and the positioning post 1253 are substantially collinear, so that the buffer gap 1814 is substantially annular. Furthermore, the relief notch 1815 is provided on the mounting base 181 and penetrates the mounting base 181 radially along the mounting hole 1813, and the buffer gap 1814 is "C"-shaped. In this implementation, the buffer member 187 includes a buffer sleeve, which is provided on the positioning post 1253 and is located in the buffer gap 1814, and at least part of the side wall of the buffer member 187 is exposed through the relief notch 1815. If the lower shell 125 vibrates, when the vibration is transmitted to the mounting base 181 through the positioning post 1253, the buffer member 187 buffers the force transmitted by the positioning post 1253, reducing the impact on the second obstacle avoidance module 18. The relief notch 1815 can provide space for the deformation of the buffer member 187 during the buffering process, improving the buffering capacity of the buffer member 187.

Furthermore, the elastic modulus of the buffer member 187 is lower than that of the mounting base 181, and the buffer member 187 is fixedly connected to the mounting base 181 by an integrated molding process, which can include double-shot molding, insert molding, or injection molding. The buffer member 187 is integrally formed on the mounting base 181, improving assembly convenience and reducing part weight. In this implementation, the mounting base 181 can be a metal base or a plastic base.

In this implementation, the obstacle avoidance module 183 includes a first downward camera 1832 and a second downward camera 1834, and the first downward camera 1832 and the second downward camera 1834 are spaced apart along the roll axis R of the UAV 100 on the side of the mounting base 181 facing the lower shell 125. It should be understood that the "spaced apart along the roll axis R" of two components described in the present specification should be broadly understood as the two components being spaced apart in the direction of the roll axis R, rather than strictly limited to being linearly arranged along the direction of the roll axis R. For example, in some implementations, the arrangement direction of the first downward camera 1832 and the second downward camera 1834 intersects the roll axis R, and the included angle between the arrangement direction of the first downward camera 1832 and the second downward camera 1834 and the roll axis R falls within any one of the following angle ranges: (0°, 3°], [3°, 6°], [6°, 10°], [10°, 20°], [20°, 35°]. For example, the angle of the included angle between the arrangement direction of the first downward camera 1832 and the second downward camera 1834 and the roll axis R can be 1°, 2°, 3°, 4°, 5°, 6°, 7°, 8°, 9°, 10°, 15°, 20°, 23°, 35°, etc.

The optical axis of the first downward camera 1832 and/or the optical axis of the second downward camera 1834 is substantially parallel to the yaw axis Y. For ease of shooting by the first downward camera 1832 and the second downward camera 1834, in this implementation, the lower shell 125 is provided with a first relief hole 1251, and the first relief hole 1251 penetrates the lower shell 125. There are two first relief holes 1251, and the two first relief holes 1251 are substantially arranged along the roll axis R and correspond to the positions of the first downward camera 1832 and the second downward camera 1834, respectively. The first downward camera 1832 and the second downward camera 1834 shoot through the two first relief holes 1251, respectively.

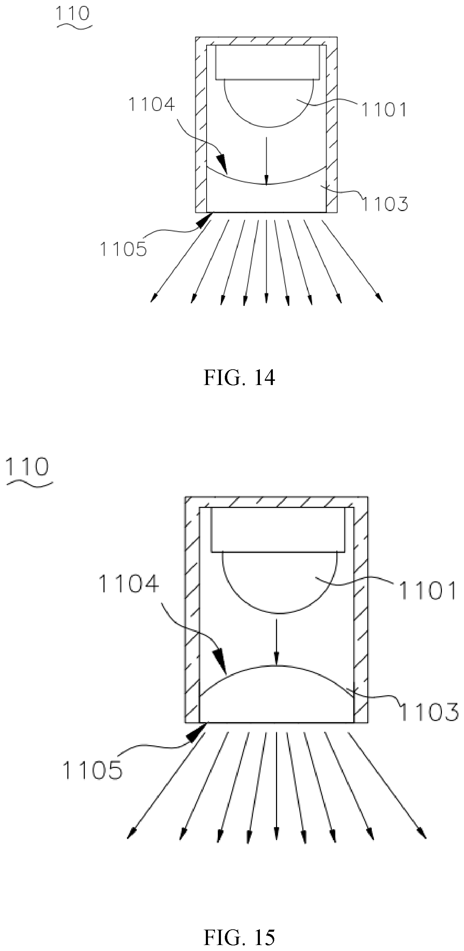

Please also refer to FIG. 13, FIG. 14, and FIG. 15. The UAV 100 can further include a fill light 110, which can be provided on the side of the body 10 facing downward to supplement light in the shooting scene and improve the shooting effect. In this implementation, the fill light 110 is provided on the body 10 and is located between the first downward camera 1832 and the second downward camera 1834. The light spot of the fill light 110 can cover the field of view of the obstacle avoidance module 183, improving the obstacle avoidance accuracy of the obstacle avoidance module 183. The body 10 can be provided with a fill light mounting hole 1816, and the fill light 110 can include a light-emitting unit 1101 and a lens 1103. The light-emitting unit 1101 is provided in the fill light mounting hole 1816, and the lens 1103 is located on the side of the light-emitting unit 1101 facing the outside of the fill light mounting hole 1816. The lens 1103 includes an incident surface 1104 and an exit surface 1105 facing away from each other. The incident surface 1104 is a curved surface and faces the light-emitting unit 1101, and the exit surface 1105 is a plane. The incident surface 1104 is a curved surface, and the exit surface 1105 is a plane, so that the fill light 110 has a flat-head fill light structure, utilizing the internal space of the fill light 110 to accommodate the curved surface without occupying external height, thereby reducing the stacking height of the fill light 110 and further reducing the overall size of the whole machine.

The above-mentioned lens 1103 can be a Fresnel lens, with the curved side facing the light-emitting unit 1101, and the light-emitting unit 1101 can include one or more LED lamp beads. In other implementations, the fill light 110 can include a concave lens, the incident surface 1104 is a concave surface, and the concave lens is configured to diverge light and expand the illumination range.

The fill light mounting hole 1816 is provided on the side of the mounting base 181 facing the lower shell 125, and the lower shell 125 can also be provided with a second relief hole 1254 for accommodating the fill light 110, and the second relief hole 1254 penetrates the lower shell 125. The fill light 110 provides fill light for the obstacle avoidance module 183 through the second relief hole 1254. In other implementations, the fill light mounting hole 1816 can be provided on the lower shell 125, and the fill light 110 is directly mounted on the lower shell 125.

In this implementation, the distance measurement module 185 includes a transmitter 1852, a receiver 1854, and a second circuit board 1856. The second circuit board 1856 is connected to the mounting base 181, and the transmitter 1852 and the receiver 1854 are spaced apart along the pitch axis P on the second circuit board 1856. The transmitter 1852 is configured to transmit signals to the target object, and the receiver 1854 is configured to receive signals reflected back from the target object. The distance measurement module 185 can obtain the distance between the UAV 100 and the target object, which can be configured to detect the distance when the UAV 100 lands or to detect the distance to obstacles below the UAV 100.

The distance measurement module 185 is connected to the side of the mounting base 181 facing the lower shell 125 and is located between the first downward camera 1832 and the second downward camera 1834. For ease of signal transmission and reception by the distance measurement module 185, in this implementation, the lower shell 125 is further provided with a third relief hole 1256, and the third relief hole 1256 penetrates the lower shell 125. There are two third relief holes 1256, and the two third relief holes 1256 are arranged along the pitch axis P and correspond to the positions of the transmitter 1852 and the receiver 1854. The transmitter 1852 and the receiver 1854 transmit and receive signals through the two third relief holes 1256, respectively.

Please also refer to FIG. 3, FIG. 5, FIG. 6, FIG. 7, and FIG. 8. In this implementation, the body 10 can further include a movable member 16, which is movably connected to the main body 12. The movable support portion 141 is provided on the movable member 16, and the movable member 16 can move relative to the main body 12 so that the movable support portion 141 is in the first position or the second position. The movable support portion 141 realizes switching between the first position and the second position through the movable member 16, so that in the first position, it does not interfere with panoramic imaging of the UAV 100, and in the second position, it supports the UAV 100 to protect the second fisheye lens 523.

In the present disclosure, unless otherwise expressly specified or limited, the terms "mount," "connect," "couple," "fix," etc. should be understood in a broad sense. For example, it can be a fixed connection, a detachable connection, or an integral connection; it can be a mechanical connection or an electrical connection; it can be a direct connection or an indirect connection through an intermediate medium; it can also be internal communication between two elements, or just surface contact. For those of ordinary skill in the art, the specific meaning of the above terms in the present disclosure can be understood according to the specific situation. The "provided on" in "the movable support portion 141 is provided on the movable member 16" can be a direct connection or an indirect connection through an intermediate medium.

The support portion 14 can include the above-mentioned movable support portion 141 and a fixed support portion 143. The present specification does not limit the specific number combination of the movable support portion 141 and the fixed support portion 143 among the plurality of support portions 14. The movable support portion 141 can be provided in plural, and the fixed support portion 143 can also be provided in plural. It should be understood that the above-mentioned "first position" and "second position" are relative to each movable support portion 141, that is, each movable support portion 141 has its own "first position" and "second position" when moving relative to the main body 12; furthermore, the movable support portion 141 can be provided on the movable member 16 to realize movement relative to the main body 12 based on the movable member 16.

As an example, the number of movable members 16 is at least three, at least three of the at least three support portions 14 are movable support portions 141, and the three movable support portions 141 are respectively provided on different movable members 16. At least three of the at least three support portions 14 can all move relative to the main body 12 to be in the first position and the second position based on the corresponding movable members 16. When at least three movable support portions 141 are all in their respective first positions, the UAV 100 can be in the flight state, and the reference plane a defined by the at least three support portions 14 is higher than the lowest point of the second fisheye lens 523, reducing the impact on the imaging of the second fisheye lens 523. When at least three movable support portions 141 are all in the second position, the UAV 100 can be in the parked state, and the support plane b defined by the at least three support portions 14 is lower than the lowest point of the second fisheye lens 523, avoiding collision between the second fisheye lens 523 and the placement plane.

In another implementation, the number of movable members 16 is plural, at least two of the at least three support portions 14 are movable support portions 141, and the other support portions 14 among the at least three support portions 14 are not limited to being movable or fixed. Among the at least three support portions 14, the two movable support portions 141 are respectively provided on different movable members 16. At least two of the at least three support portions 14 can all move relative to the main body 12 to be in their respective first positions and second positions. When at least two movable support portions 141 are all in their respective first positions, the UAV 100 can be in the flight state, and the reference plane a defined by the at least three support portions 14 is higher than the lowest point of the second fisheye lens 523. When at least two movable support portions 141 are all in their respective second positions, the UAV 100 can be in the parked state, and the support plane b defined by the at least three support portions 14 is lower than the lowest point of the second fisheye lens 523.

In this implementation, at least two of the at least three support portions 14 are movable support portions 141, and one of the at least three support portions 14 is a fixed support portion 143, which is fixedly provided on the main body 12. The present specification does not limit the specific combination of the at least three support portions 14. For example, the number of movable support portions 141 can be two, and if the number of support portions 14 is greater than three, the number of movable support portions 141 can also be three. As an example, the number of support portions 14 is set to three, of which two are movable support portions 141 provided on the movable member 16, and one is a fixed support portion 143 fixed to the main body 12. When the two movable support portions 141 are in the first position, they define the reference plane a together with the fixed support portion 143; and when the two movable support portions 141 are in the second position, they define the support plane b together with the fixed support portion 143.

The present specification does not limit the specific structure of the support portion 14. The support portion 14 can be a support protrusion, a support rod, a support point, etc. In this implementation, the support portion 14 is a support point. When the movable support portion 141 is in the second position, it is the lowest point of the structure of the body 10, such as the lowest point of the main body 12, the lowest point of the movable member 16, etc.

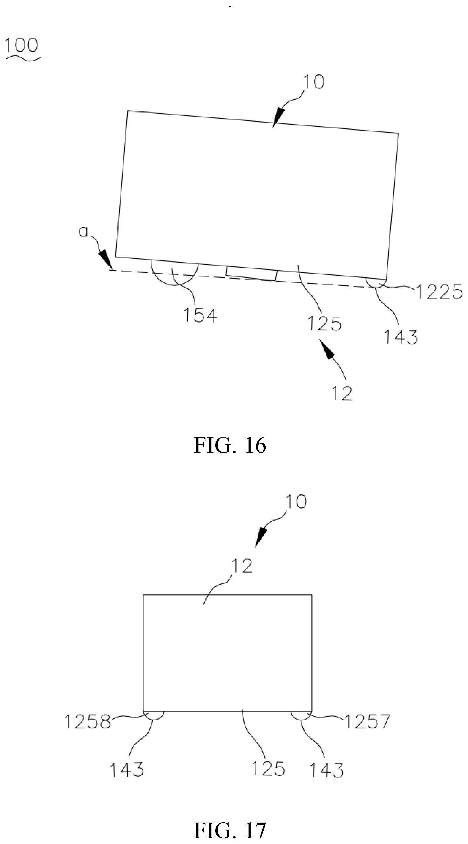

The present specification does not limit the specific position of the fixed support portion 143. As an example, as shown in FIG. 16, the main body 12 can be provided with a first protrusion 1255. When the UAV 100 is in the flight state, the first protrusion 1255 is located at the bottom of the main body 12 (the side of the main body 12 facing downward) and protrudes relative to the surface of the main body 12, and the fixed support portion 143 is located at the protruding end of the first protrusion 1255. Specifically, the first protrusion 1255 is connected to the lower shell 125 and protrudes relative to the outer surface of the lower shell 125, and the fixed support portion 143 is the lowest point at the end of the first protrusion 1255 away from the lower shell 125. The lowest point is the lowest point of the first protrusion 1255 when the UAV 100 is in the hovering state.

The present specification does not limit the specific connection method between the first protrusion 1255 and the lower shell 125. For example, the first protrusion 1255 can be a support block or support post fixedly connected to the lower shell 125 by a connection process or connection structure. In some implementations, the first protrusion 1255 can also be integrally formed with the lower shell 125. In other implementations, the fixed support portion 143 can also be the lowest point of the lower shell 125 in the flight state of the UAV 100.

In some implementations, two of the at least three support portions 14 are fixed support portions 143, and one of the at least three support portions 14 can be a movable support portion 141. The two fixed support portions 143 are both fixedly provided on the main body 12, and the movable support portion 141 is provided on the movable member 16. As shown in FIG. 17, the main body 12 can be provided with a second protrusion 1257 and a third protrusion 1258. When the UAV 100 is in the flight state, the second protrusion 1257 is located at the bottom of the main body 12 and protrudes relative to the surface of the main body 12, and the third protrusion 1258 is located at the bottom of the main body 12 and protrudes relative to the surface of the main body 12. One fixed support portion 143 is located at the protruding end of the second protrusion 1257, and the other fixed support portion 143 is located at the protruding end of the third protrusion 1258. Specifically, the second protrusion 1257 is connected to the lower shell 125 and protrudes relative to the outer surface of the lower shell 125, and the third protrusion 1258 is connected to the lower shell 125 and protrudes relative to the outer surface of the lower shell 125. In the flight state, one fixed support portion 143 is the lowest point at the end of the second protrusion 1257 away from the lower shell 125, and the other fixed support portion 143 is the lowest point at the end of the third protrusion 1258 away from the lower shell 125. Similarly, the second protrusion 1257 and the third protrusion 1258 can also be indirectly connected to the lower shell 125 or integrally formed with the lower shell 125.

Please also refer to FIG. 3 and FIG. 4. The present specification does not limit the specific structure of the movable member 16. For example, the movable member 16 can be a telescopic member provided on the main body 12, or a flipping member provided on the main body 12, etc. In this implementation, the body 10 can include a plurality of foldable arms 15 connected to the main body 12, and the plurality of foldable arms 15 can move relative to the main body 12 to be in an unfolded state or a folded state. The propulsion device 30 is provided on the plurality of foldable arms 15, and at least one of the plurality of foldable arms 15 constitutes the above-mentioned movable member 16. The movable support portion 141 is provided on the foldable arm 15, and the foldable arm 15 can move relative to the main body 12 to switch between the unfolded state and the folded state. During the switching process, the foldable arm 15 can drive the movable support portion 141 to switch between the first position and the second position. When the foldable arm 15 is in use, it is in the unfolded state, and the movable support portion 141 is in the first position. When the UAV 100 is stored, the foldable arm 15 can move relative to the main body 12 to be in the folded state, and the movable support portion 141 is in the second position, which can reduce the overall space occupied by the UAV 100 and facilitate storage of the UAV 100.

In this implementation, the foldable arm 15 can include a rotating shaft 152 (as shown in FIG. 9) and an arm 154, and the arm 154 is rotatably connected to the main body 12 through the rotating shaft 152. The arm 154 can rotate about the rotating shaft 152 relative to the main body 12. When the UAV 100 is in the storage state, the foldable arm 15 is in the folded state (as shown in FIG. 4), and the arm 154 is close to the main body 12. When the UAV 100 is about to take off, the arm driving mechanism 152 drives the arm 154 to move relative to the main body 12 to switch from the folded state to the unfolded state. Then, the propulsion device 30 provides flight thrust for the UAV 100 to take off. After the flight is completed, the propulsion device 30 drives the UAV 100 to land. After landing and stopping, if the UAV 100 needs to be stored, the arm 154 moves relative to the main body 12 to the folded state again to reduce the overall space occupied by the whole machine and reduce the possibility of damaging the foldable arm 15 during storage.

The parked state of the UAV 100 includes a ready-to-fly state (as shown in FIG. 6) and a storage state. When the UAV 100 is in the ready-to-fly state, the foldable arm 15 is in the unfolded state; when the UAV 100 is in the storage state, the foldable arm 15 is in the folded state. The flight state of the UAV 100 includes a forward flight state and a hovering state. When the UAV 100 is in the forward flight state and the hovering state, the foldable arm 15 is in the unfolded state.

When the movable support portion 141 is in the first position, the foldable arm 15 is in the unfolded state (the UAV 100 can be in the ready-to-fly state or the forward flight state). At this time, the movable support portion 141 and the fixed support portion 143 can form the reference plane a, reducing the impact on panoramic imaging. In other implementations, when the UAV 100 is in the ready-to-fly state, the foldable arm 15 is in the unfolded state. At this time, the movable support portion 141 is in the first position, but the movable support portion 141 and the fixed support portion 143 do not form the reference plane a. The movable support portion 141 can contact the placement plane of the UAV 100 to support the UAV 100, thereby avoiding damage to the second fisheye lens 523.

When the movable support portion 141 is in the second position, the foldable arm 15 is in the folded state. At this time, the movable support portion 141 and the fixed support portion 143 form the support plane b to support the UAV 100 and avoid damage to the second fisheye lens 523. When the movable support portion 141 is in the second position, the UAV 100 can be in the storage state.

Please also refer to FIG. 3, FIG. 4, and FIG. 18. Specifically, in this implementation, the rotating shaft 152 can be connected to the middle frame 123, and the arm 154 is rotatably connected to the middle frame 123 through the rotating shaft 152. The present specification does not limit the specific number of foldable arms 15. For example, the number of foldable arms 15 can be four or six. In this implementation, the number of foldable arms 15 is set to four, so the number of arms 154 is also set to four, and the four arms 154 are arranged circumferentially around the main body 12. Specifically, the four arms 154 can include a left front arm 1542, a right front arm 1544, a left rear arm 1546, and a right rear arm 1548. The left front arm 1542 and the right front arm 1544 are respectively located on two sides of the nose end 101, and the left rear arm 1546 and the right rear arm 1548 are respectively located on two sides of the tail end 103. The present specification does not limit the specific installation positions of the four arms 154, which can be adjusted according to the propulsion device 30 or the center of gravity of the whole machine.

The present specification does not limit the specific way the arm 154 rotates. For example, the state of the arm 154 can be manually changed by the operator. When the UAV 100 is ready to take off, the arm 154 is manually unfolded, and before storage, the arm 154 is manually rotated to the folded state. Furthermore, an elastic component can be provided between the arm 154 and the middle frame 123 (or between the arm 154 and the rotating shaft 152), so that when the operator manually unfolds the arm 154, only a slight force is needed, and the arm 154 can automatically unfold (or fold) in place under the action of the elastic component. In other implementations, the arm 154 can also be automatically unfolded or folded. For example, the foldable arm 15 can include a drive mechanism, and the drive mechanism can include a drive source, which can include a rotary motor, a rotary cylinder, etc., and can be directly transmission-connected to the rotating shaft of the arm 154. In some implementations, the drive mechanism can also include a transmission assembly, and the transmission assembly can include a gear, a screw, etc., and the drive source is connected to the arm 154 through the transmission assembly.

The present specification does not limit the specific direction of the axis O1 (as shown in FIG. 9) of the rotating shaft 152. As an example, the axis O1 can be parallel to the yaw axis Y of the UAV 100. During storage, the left front arm 1542 and the right front arm 1544 rotate backward to be close to the main body 12, and the left rear arm 1546 and the right rear arm 1548 rotate forward to be close to the main body 12. To further reduce the width of the UAV 100 during storage, the left front arm 1542 and the left rear arm 1546 are arranged side by side along the yaw axis Y on the same side of the main body 12, and the right front arm 1544 and the right rear arm 1548 are arranged side by side along the yaw axis Y on the other side of the main body 12, reducing the width of the UAV 100 during storage.

The axis O1 is parallel to the yaw axis Y of the UAV 100. When the UAV 100 is in the flight state, the movable support portion 141 is provided on the side of the arm 154 facing downward. The present specification does not limit the specific position of the movable support portion 141 on the arm 154. For example, in the flight state, the movable support portion 141 can be the lowest point of the surface of the arm 154 facing downward. In other implementations, in the flight state, the movable support portion 141 can also be the lowest point of a protrusion provided on the arm 154. Specifically, the arm 154 can be provided with a fourth protrusion 1541, and the fourth protrusion 1541 is provided on the arm 154 and protrudes relative to the surface of the arm 154. In the flight state, the movable support portion 141 is located at the end of the fourth protrusion 1541 facing downward. The movable support portion 141 is the lowest point at the end of the fourth protrusion 1541 away from the arm 154. The lowest point is the lowest point of the arm 154 when the UAV 100 is in the hovering state.

The present specification does not limit the specific position of the fourth protrusion 1541 on the arm 154. Taking the flight state as an example, the fourth protrusion 1541 can be provided below the arm 154, above the arm 154, or on the side wall of the arm 154. It should be noted that the fourth protrusion 1541 can be provided on the drive member 32 or the propeller 34 of the propulsion device 30 on the arm 154. The present specification does not limit the specific connection method between the fourth protrusion 1541 and the arm 154 or the propulsion device 30. For example, the fourth protrusion 1541 can be a support block or support post fixedly connected to the arm 154 or the propulsion device 30 by a connection process or connection structure. In some implementations, the fourth protrusion 1541 can also be integrally formed with the arm 154.

In other implementations, the axis O1 can also intersect the yaw axis Y, which can increase the height difference between the lowest points of the arm 15 in the unfolded state and the folded state. The present specification does not limit the specific range of the angle between the axis O1 and the yaw axis Y. The angle between the axis O1 and the yaw axis Y can fall within any one of the following angle ranges: (0°, 3°], [3°, 6°], [6°, 10°], [10°, 20°]. For example, the angle between the axis O1 and the yaw axis Y can be 1°, 2°, 3°, 4°, 5°, 6°, 7°, 8°, 9°, 10°, 15°, 20°, etc.

In some implementations, the axis O1 can be parallel to the first plane c. The arm 154 can flip relative to the main body 12 about the axis O1 to realize switching between the unfolded state and the folded state. In this implementation, the axis O1 can be parallel to the pitch axis P or the roll axis R, and the arm 154 can be flipped to the top or bottom of the main body 12 for storage. In the flight state, the foldable arm 15 is in the unfolded state, and the arm 154 is flipped to the end away from the main body 12. At this time, the movable support portion 141 is provided at the highest point on the side of the arm 154 away from the ground.

In other implementations, the axis O1 intersects the first plane c. The present specification does not limit the specific range of the angle between the axis O1 and the first plane c. The angle between the axis O1 and the first plane c can fall within any one of the following angle ranges: (0°, 3°], [3°, 6°], [6°, 10°], [10°, 20°]. For example, the angle between the axis O1 and the first plane c can be 1°, 2°, 3°, 4°, 5°, 6°, 7°, 8°, 9°, 10°, 15°, 20°, etc.

In this implementation, the propulsion device 30 is provided on the arm 154 and is configured to provide thrust for the UAV 100 to fly. The propulsion device 30 can include a driving member 32 and a propeller 34, the driving member 32 is connected between the arm 154 and the propeller 34, and is configured to drive the propeller 34 to rotate. The movable support portion 141 can be provided at the end of the arm 154, or can be provided on the driving member 32. The driving member 32 can move with the arm 154 relative to the main body 12, thereby changing the position of the movable support portion 141. In the flight state, the driving member 32 is located below the propeller 34, and the movable support portion 141 is located at the lowest point on the side of the driving member 32 facing the ground. In this implementation, the axis O1 is parallel to the yaw axis Y. Even after the arm 154 moves relative to the main body 12 to be in the folded state, the movable support portion 141 is still located at the lowest point on the side of the driving member 32 facing the ground. The driving member 32 can be a rotary motor.

In another implementation, when the UAV 100 is in the flight state, the driving member 32 is located below the propeller 34, and the movable support portion 141 is located at the highest point on the side of the driving member 32 away from the ground. In this implementation, the axis O1 can be parallel to the first plane c. When the arm 154 rotates relative to the main body 12 to the folded state, the driving member 32 is flipped, and the highest point in the unfolded state becomes the lowest point in the folded state. At this time, the movable support portion 141 is located at the lowest point on the side of the driving member 32 facing the ground.

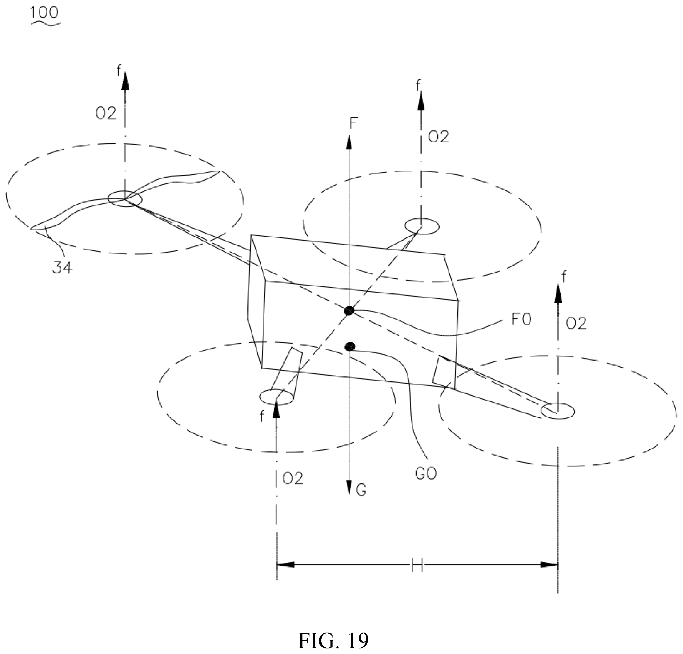

The number of propellers 34 is set to multiple sets, and each set of propellers 34 can include multiple blades. For example, each set of propellers 34 can include two blades, or each set of propellers 34 can include three or four blades. Please also refer to FIG. 3 and FIG. 19. In the hovering state, each propeller 34 generates a thrust f, and the point of action of f is basically at the rotating shaft at the output end of the corresponding driving member 32 (for example, at the rotating shaft of the rotary motor). The resultant force F of the thrust f generated by the four propellers 34 balances the gravity G of the UAV 100, so that the UAV 100 stably hovers in the air. At this time, the resultant force F of the thrust f generated by the four propellers 34 is the thrust exerted by the propulsion device 30 on the whole UAV 100, and its point of action is equivalent to the thrust center FO, so the propulsion device 30 can be regarded as having a thrust center FO. Multiple propellers 34 are distributed around the periphery of the body 10 and together form the thrust center FO. Each propeller 34 has a rotation axis O2 in the flight state, and the rotation axis O2 is the rotating shaft at the output end of the corresponding driving member 32 (for example, the rotating shaft of the rotary motor), and the thrust f generated by the above-mentioned propeller 34 is collinear with the rotation axis O2.

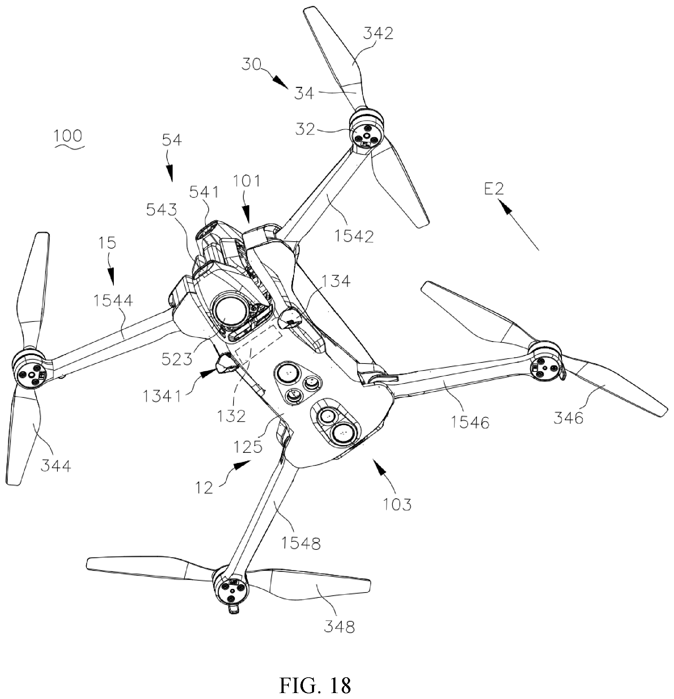

The number of propulsion devices 30 can be set to multiple. In this implementation, the number of propulsion devices 30 is the same as the number of foldable arms 15. For example, the number of propulsion devices 30 and the number of arms 154 are both set to four. Please refer to FIG. 18. The four propulsion devices 30 include four propellers 34 and four driving members 32, and the four driving members 32 are respectively connected to the four propellers 34 in a one-to-one correspondence. The four propellers 34 are respectively connected to the four arms 154 in a one-to-one correspondence, and the four propellers 34 include a left front rotor 342, a right front rotor 344, a left rear rotor 346, and a right rear rotor 348. The left front rotor 342 is connected to the left front arm 1542, the right front rotor 344 is connected to the right front arm 1544, the left rear rotor 346 is connected to the left rear arm 1546, and the right rear rotor 348 is connected to the right rear arm 1548. The left front rotor 342 and the right front rotor 344 are respectively located on two sides of the nose end 101, and the left rear rotor 346 and the right rear rotor 348 are respectively located on two sides of the tail end 103. The distance between the rotation axis O2 of the right front rotor 344 and the rotation axis O2 of the right rear rotor 348 in the forward flight direction E2 is the wheelbase H. In the hovering state, the maximum distance D between the multiple thrust centers FO and the center of gravity GO of the UAV 100 satisfies: D ≤ 5% * H. It should be understood that there is a corresponding wheelbase between any two of the multiple propellers 34, that is, in the multiple propellers 34, the distance between the rotation axes O2 of each pair of propellers 34 is called the wheelbase, and there will be multiple wheelbases for each pair of propellers 34 in the multiple propellers 34. The wheelbase H mentioned above is the largest among the multiple wheelbases. The hovering state in this implementation should be understood as the state in which the UAV is hovering in the air without external interference such as wind. At this time, when the maximum distance D between the multiple thrust centers FO and the center of gravity GO of the UAV 100 satisfies: D ≤ 5% * H, the overall weight of the UAV 100 is further reduced, making the UAV 100 lighter.

Please also refer to FIG. 4 and FIG. 18. In some implementations, the body 10 can further include a foldable landing gear 13 connected to the main body 12, and the foldable landing gear 13 can move relative to the main body 12 to be in a supporting state or a retracted state. The foldable landing gear 13 can constitute the above-mentioned movable member 16. When the foldable landing gear 13 is in the supporting state, the movable support portion 141 is located at the lowest point of the foldable landing gear 13, which is the second position of the movable support portion 14. The movable support portion 141 is provided on the foldable landing gear 13, and the foldable landing gear 13 can move relative to the main body 12 to switch between the supporting state and the retracted state. During the switching process, the foldable landing gear 13 can drive the movable support portion 141 to switch between the first position and the second position.

When the UAV 100 is in the ready-to-fly state, the foldable landing gear 13 is in the supporting state. When the UAV 100 is in the storage state, the foldable landing gear 13 is in the retracted state. When the UAV 100 is in the flight state (including the forward flight state and the hovering state), the foldable landing gear 13 is in the retracted state.

When the movable support portion 141 is in the first position, the foldable landing gear 13 is in the retracted state, and the movable support portion 141 and the fixed support portion 143 form the reference plane a, avoiding the impact on panoramic imaging; at this time, the UAV 100 can be in any one of the forward flight state, the hovering state, or the storage state. When the movable support portion 141 is in the second position, the foldable landing gear 13 is in the supporting state, and the movable support portion 141 and the fixed support portion 143 form the support plane b to support the UAV 100 and avoid damage to the second fisheye lens 523. At this time, the UAV 100 can be in the ready-to-fly state or the storage state.

When the UAV 100 is in the flight state, the foldable landing gear 13 is in the retracted state and will not enter the field of view of the second fisheye lens 523 to affect panoramic imaging. When the UAV 100 is in the ready-to-fly state (as shown in FIG. 6), the foldable landing gear 13 is in the unfolded state to support the UAV 100 and avoid damage to the second fisheye lens 523. When the UAV 100 is stored (as shown in FIG. 4), the foldable landing gear 13 can move relative to the main body 12 to be in the retracted state, reducing the overall space occupied by the UAV 100 and making the UAV 100 more convenient to store.

In this implementation, the foldable landing gear 13 can include a landing gear drive mechanism 132 and a landing gear 134, and the landing gear 134 is rotatably connected to the main body 12. The landing gear drive mechanism 132 is connected between the main body 12 and the landing gear 134, and the landing gear drive mechanism 132 is configured to drive the landing gear 134 to rotate relative to the main body 12. When the UAV 100 is in the storage state, the foldable landing gear 13 is in the retracted state, and the landing gear 134 is close to the main body 12. When the UAV 100 is about to take off, the landing gear drive mechanism 132 drives the landing gear 134 to move relative to the main body 12 to switch from the retracted state to the supporting state. Then, the propulsion device 30 provides flight thrust for the UAV 100 to take off. During takeoff, the landing gear drive mechanism 132 drives the landing gear 134 to move relative to the main body 12 to switch from the supporting state back to the retracted state, avoiding the impact on panoramic imaging. After the flight is completed, the propulsion device 30 drives the UAV 100 to land. During landing, the landing gear drive mechanism 132 drives the landing gear 134 to move relative to the main body 12 to the supporting state again to protect the second fisheye lens 523. In some implementations, to further reduce the overall space occupied by the UAV 100 during storage, the lower shell 125 can be provided with a recessed part, such as a groove, to accommodate the landing gear 134 in the retracted state.

Specifically, in this implementation, the landing gear 134 is rotatably connected to the lower shell 125, and the landing gear 134 has a connecting end 1341 and a free end 1343 (as shown in FIG. 4). The connecting end 1341 is connected to the lower shell 125, for example, rotatably connected to the lower shell 125 through a rotating shaft. The landing gear 134 can also be detachably connected to the lower shell 125 for replacement when worn. When the landing gear 134 moves relative to the main body 12, the free end 1343 can move farther away from or closer to the main body 12. The landing gear drive mechanism 132 can be provided inside the main body 12 and is transmission-connected to the landing gear 134. The present specification does not limit the specific number of foldable landing gears 13. For example, the number of foldable landing gears 13 can be one, two, three, four, etc. In this implementation, the number of foldable landing gears 13 is set to two, and the number of landing gears 134 is also set to two. The two landing gears 134 are arranged along the pitch axis P. Specifically, the two landing gears 134 can be provided at the end of the main body 12 close to the nose end 101, and cooperate with the fixed support portion 143 at the bottom of the main body 12 to support the UAV 100. The present specification does not limit the specific installation positions of the two landing gears 134, which can be adjusted according to the center of gravity of the whole machine.

The landing gear drive mechanism 132 can be provided inside the main body 12, for example, provided on the lower shell 125. The present specification does not limit the specific structure of the landing gear drive mechanism 132. For example, the landing gear drive mechanism 132 can include a drive source, which can include a rotary motor, a servo, a rotary cylinder, etc., and can be directly transmission-connected to the rotating shaft of the landing gear 134. In some implementations, the landing gear drive mechanism 132 can also include a transmission assembly, and the transmission assembly can include a gear, a screw, etc., and the drive source is connected to the landing gear 134 through the transmission assembly.

In some implementations, the two landing gears 134 can be driven together by one landing gear drive mechanism 132. For example, the landing gear drive mechanism 132 includes a drive source and a drive shaft, the drive shaft is connected between the two landing gears 134 and is transmission-connected to the drive source, and the two landing gears 134 are coaxially driven, improving support stability and reducing the overall weight of the whole machine.

From the above, the foldable landing gear 13 can drive the movable support portion 141 to switch between the first position and the second position during the switching process. When the foldable landing gear 13 is in the supporting state, the movable support portion 141 is located at the lowest point of the foldable landing gear 13, that is, the lowest point of the free end 1343 of the foldable landing gear 13. In some implementations, the fixed support portion 143 can be provided at the connecting end 1341 of the foldable landing gear 13. When the UAV 100 is in the storage state, the foldable landing gear 13 is in the retracted state. At this time, both the free end 1343 and the connecting end 1341 are close to the main body 12, and the connecting end 1341 protrudes from the lower shell 125. The fixed support portion 143 is located at the lowest point of the connecting end 1341, and can cooperate with other fixed support portions 143 on the main body 12 to form a support plane b lower than the second fisheye lens 523, or can cooperate with the movable support portion 141 on the foldable arm 15 or the propulsion device 30 to form the support plane b.

In this implementation, at least three support portions 14 together define the support plane b, which is configured to support the UAV 100 to protect the second fisheye lens 523. The at least three support portions 14 include the movable support portion 141 and the fixed support portion 143. The present specification does not limit the positions of the movable support portion 141 and the fixed support portion 143. As described above, the movable support portion 141 can be provided on the foldable arm 15, for example, at the lowest point on the side of the arm 154 facing downward (in the flight state), or can be provided on the propulsion device 30, for example, on the driving member 32, or the movable support portion 141 can also be provided on the foldable landing gear 13. Similarly, the fixed support portion 143 can be the lowest point of the lower shell 125, or the lowest point of a protrusion on the lower shell 125. The present specification does not limit the specific number of the movable support portion 141 and the fixed support portion 143. The movable support portion 141 can be provided in two, the fixed support portion 143 can be provided in two, or the movable support portion 141 can be provided in three, and the fixed support portion 143 can be provided in two.

In one implementation of the present disclosure, the movable support portion 141 is provided in two, and the two movable support portions 141 are respectively provided on the two landing gears 134, and the fixed support portion 143 is provided in one, and the fixed support portion 143 is the lowest point on the side of the lower shell 125 facing downward. When the foldable landing gear 13 is in the supporting state, the two movable support portions 141 in the second position and the one fixed support portion 143 together define the support plane b. In the parked state, the support plane b coincides with the parked plane and is below the lowest point of the second fisheye lens 523, so that the second fisheye lens 523 is spaced from the parked plane, avoiding damage to the second fisheye lens 523. The present specification does not limit the height difference between the second fisheye lens 523 and the support plane b in the parked state. The height difference between the second fisheye lens 523 and the support plane b in the parked state can be 5 mm, 10 mm, 15 mm, 20 mm, 30 mm, 50 mm, 100 mm, etc.

To improve the stability of the support plane b for supporting the UAV 100 in the parked state, in this implementation, in the parked state, when the UAV 100 is projected onto a reference projection plane along a specified direction, the projection of the center of gravity of the UAV 100 falls within the projection range of the support plane b (as shown in FIG. 7 and FIG. 8). The reference projection plane is parallel to the support plane b, and the specified direction is perpendicular to the reference projection plane. The reference projection plane can be understood as the parked plane where the UAV 100 is parked (such as a table or the ground), and the specified direction is the direction perpendicular to the parked plane, for example, if the reference plane a is the horizontal plane S, the specified direction is the direction of gravity. When the projection of the center of gravity of the UAV 100 falls within the projection range of the support plane b, the support plane b can provide good support for the UAV 100, improving the stability of the UAV 100 in the parked state.

Please refer to FIG. 9, FIG. 20, and FIG. 21. In this implementation, the UAV 100 can further include a bracket 20, the bracket 20 is connected to the main body 12, and the bracket 20 is configured to mount the image acquisition device 50. The bracket 20 is provided with a heat dissipation structure, which is configured to dissipate heat from the image acquisition device 50. The image acquisition device 50 is connected to the bracket 20 and is connected to the main body 12 through the bracket 20, which improves the convenience of assembly of the whole machine, and the heat dissipation structure dissipates heat from the image acquisition device 50, improving the quality of images captured by the image acquisition device 50.

The bracket 20 can include a mounting main body 21 and a shock-absorbing member 23, the shock-absorbing member 23 is connected between the mounting main body 21 and the main body 12, and the mounting main body 21 is connected to the main body 12 through the shock-absorbing member 23. The image acquisition device 50 is provided on the mounting main body 21, and the shock-absorbing member 23 reduces the impact on the image acquisition device 50 caused by the movement of components on the main body 12 (such as the foldable arm 15 and the propulsion device 30, etc.), thereby improving the quality of images acquired by the image acquisition device 50.

In this implementation, the bracket 20 can further include a connecting frame 25, the shock-absorbing member 23 is connected between the connecting frame 25 and the mounting main body 21, and the connecting frame 25 is provided with a mounting portion 254, and the mounting portion 254 is directly connected to the middle frame 123 by a fastener. The image acquisition device 50 is provided on the bracket 20, and the bracket 20 is directly connected to the main body 12 by a fastener, so that the image acquisition device 50 and the bracket 20 are modularly arranged, and assembly and disassembly are convenient.

The connecting frame 25 can include a mounting seat 252 and a plurality of the above-mentioned mounting portions 254, the plurality of mounting portions 254 are spaced apart on the mounting seat 252, and the plurality of mounting portions 254 are respectively connected to the main body 12, and a heat dissipation gap 256 communicating with the outside is formed between the mounting seat 252 and the main body 12 (as shown in FIG. 3). The image acquisition device 50 and the bracket 20 are connected to the main body 12 through the mounting portion 254, and there is also a heat dissipation gap 256 between the bracket 20 and the main body 12, so that part of the heat generated by the image acquisition device 50 during operation can be dissipated through the heat dissipation gap 256, improving the heat dissipation efficiency of the image acquisition device 50. In addition, the airflow during flight of the UAV 100 can also dissipate heat from the components inside the bracket 20 through the heat dissipation gap 256, further improving the heat dissipation effect.

To improve the connection stability between the mounting seat 252 and the mounting main body 21, in this implementation, the mounting seat 252 is a semi-surrounding structure, thereby increasing the connection area with the mounting main body 21. As an example, the mounting seat 252 can include a main mounting plate 2521 and two side plates 2523, the two side plates 2523 are connected to the same side of the main mounting plate 2521 and are spaced apart from each other, together forming a semi-surrounding mounting seat 252. The mounting main body 21 is at least partially accommodated between the two side plates 2523, and the shock-absorbing member 23 can be provided between the side plates 2523 and the mounting main body 21. The mounting seat 252 as a whole can be made of metal, and the main mounting plate 2521 and the two side plates 2523 are both spaced from the main body 12.

The mounting portion 254 is fixedly connected to the side plate 2523, the number of mounting portions 254 is set to multiple, the multiple mounting portions 254 are divided into two groups, and the two groups of mounting portions 254 are respectively connected to the opposite sides of the two side plates 2523. Each group of mounting portions 254 can include two mounting portions 254. Taking the mounting portions 254 on one side plate 2523 as an example, the two mounting portions 254 are spaced apart along the height direction of the body 10. The mounting portion 254 protrudes relative to the surface of the side plate 2523 to create the heat dissipation gap 256 between the mounting seat 252 and the middle frame 123, and the mounting portion 254 can be provided with a mounting hole for mounting a fastener.

To increase the connection stability between the main body 12 and the bracket 20, in this implementation, the middle frame 123 can include two supporting shell portions 1235 (as shown in FIG. 9). The supporting shell portions 1235 are connected to the same end of the main shell portion 1232, and the two supporting shell portions 1235 are spaced apart to form a receiving space 124, and the bracket 20 is accommodated in the receiving space 124. The multiple mounting portions 254 are distributed on two sides of the bracket 20 and are respectively connected to the two supporting shell portions 1235, and the heat dissipation gap 256 is provided between the supporting shell portion 1235 and the mounting seat 252. The bracket 20 is embedded in the receiving space 124 of the main body 12, improving the connection stability between the bracket 20 and the main body 12, reducing the length of the whole UAV 100, and optimizing the appearance of the UAV 100.

Specifically, in this implementation, the internal spaces of the main shell portion 1232 and the supporting shell portion 1235 are in communication to facilitate the installation of other internal components. The supporting shell portion 1235 can be integrally formed with the main shell portion 1232. The opposite sides of the two supporting shell portions 1235 can be provided with connection structures for cooperating with the mounting portion 254. The two groups of mounting portions 254 are respectively connected to the corresponding supporting shell portions 1235 by fasteners, where the fasteners can include screws, pins, and other fastening structures.

In this implementation, the upper shell 121 and the lower shell 125 are respectively connected and cover the opposite sides of the middle frame 123, and the overall shape of the upper shell 121 and the lower shell 125 also substantially matches the middle frame 123. Accordingly, the upper shell 121 can also include a main shell body and two supporting shell portions, which are connected one-to-one with the main shell portion 1232 and the two supporting shell portions 1235 of the middle frame 123. Similarly, the lower shell 125 can also include a main shell body and two supporting shell portions, which are connected one-to-one with the main shell portion 1232 and the two supporting shell portions 1235 of the middle frame 123.

The present specification does not limit the specific structure of the shock-absorbing member 23. For example, the shock-absorbing member 23 can include at least one of a shock-absorbing ball, a shock-absorbing washer, a shock-absorbing sleeve, etc. In this implementation, the shock-absorbing member 23 includes a second shock-absorbing ball 232. The mounting main body 21 is provided with a first mounting hole 211, the connecting frame 25 is provided with a second mounting hole 251, one side of the second shock-absorbing ball 232 is connected to the first mounting hole 211, and the other side is connected to the second mounting hole 251. Specifically, the second mounting hole 251 is provided on the side plate 2523. To save material and reduce weight, the side plate 2523 can be provided with a mounting tab for connecting the second shock-absorbing ball 232, and the mounting tab protrudes relative to the side plate 2523, and the second mounting hole 251 is provided on the mounting tab. When the mounting main body 21 is embedded between the two side plates 2523, the first mounting hole 211 and the second mounting hole 251 are in communication, and two sides of the second shock-absorbing ball 232 are respectively inserted into the first mounting hole 211 and the second mounting hole 251.

In this implementation, the second shock-absorbing ball 232 has a deformation axis, and the plurality of second shock-absorbing balls 232 are divided into two groups, and the two groups of second shock-absorbing balls 232 are respectively located on two sides of the connecting frame 25. Each group of second shock-absorbing balls 232 includes at least three second shock-absorbing balls 232, and the deformation axes of the three second shock-absorbing balls 232 in the same group intersect each other. The "deformation axis" can be understood as the preset shock-absorbing compression direction of the second shock-absorbing ball 232, and the deformation axis of the second shock-absorbing ball 232 is coaxial with the above-mentioned first mounting hole 211 and the second mounting hole 251. The two groups of second shock-absorbing balls 232 are respectively located on the two side plates 2523, and the deformation axes of the three second shock-absorbing balls 232 in each group intersect, so that the impact force from the body 10 to the image acquisition device 50 on the bracket 20 can be buffered in three directions, further improving the shock-absorbing effect and improving the shooting stability of the image acquisition device 50.

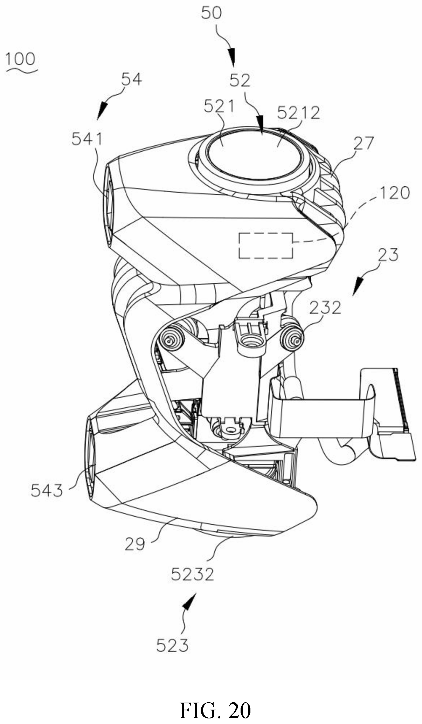

The present specification does not limit the specific arrangement of the two groups of second shock-absorbing balls 232. To improve the uniformity of shock absorption, in this implementation, the three second shock-absorbing balls 232 in each group are distributed at the three vertices of an equilateral triangle (as shown in FIG. 20). The three second shock-absorbing balls 232 in each group can uniformly buffer the impact force from three directions, improving the shock-absorbing effect. In this implementation, among the two groups of second shock-absorbing balls 232, the positions of the three second shock-absorbing balls 232 in the first group correspond one-to-one with the three second shock-absorbing balls 232 in the second group. As shown in FIG. 20, the centers of the four second shock-absorbing balls 232 in the two groups of second shock-absorbing balls 232 close to the first fisheye lens 521 are located on the same plane, and the centers of the two second shock-absorbing balls 232 in the two groups of second shock-absorbing balls 232 close to the second fisheye lens 523 are located on the same straight line.

The bracket 20 loads the second shock-absorbing balls 232 through the connecting frame 25. During assembly, the two groups of second shock-absorbing balls 232 can be installed on the connecting frame 25 first, then the connecting frame 25 is installed on the mounting main body 21, and finally the whole is installed on the main body 12 through the mounting portion 254. This installation method avoids the complicated process of directly installing the second shock-absorbing balls 232 on the structurally complex mounting main body 21, and also improves the fit stability between the various structures of the bracket 20.

In this implementation, the image acquisition device 50 is provided on the mounting main body 21, and the mounting main body 21 further improves the heat dissipation effect of the image acquisition device 50. The mounting main body 21 can include a heat conduction portion 2121 and heat dissipation fins 2123, the heat conduction portion 2121 is connected to the connecting frame 25, and the heat dissipation fins 2123 are connected to the heat conduction portion 2121. The first fisheye lens 521 and the second fisheye lens 523 are respectively provided on the heat conduction portion 2121 and are in contact with the surface of the heat conduction portion 2121. When the image acquisition device 50 is operating, the heat generated by the first fisheye lens 521 and the second fisheye lens 523 is conducted to the heat dissipation fins 2123 by the heat conduction portion 2121, reducing the temperature of the first fisheye lens 521 and the second fisheye lens 523, improving shooting stability, and extending the service life of the first fisheye lens 521 and the second fisheye lens 523.

The mounting main body 21 is used for heat conduction and heat dissipation, and the mounting main body 21 forms at least part of the above-mentioned heat dissipation structure, which realizes the heat dissipation function for the image acquisition device 50 through better heat conduction performance. As an example, the mounting main body 21 can include a contact heat conduction part, heat dissipation ribs, heat dissipation channels, ventilation holes, and other heat dissipation designs. The present specification does not limit the specific material of the mounting main body 21, and the mounting main body 21 can be made of a metal material with good heat conduction performance to improve heat conduction and heat dissipation effects. For example, the material of the mounting main body 21 can include aluminum, copper, etc.

The present specification does not limit the specific structure of the heat conduction portion 2121. In practical applications, the specific structure of the heat conduction portion 2121 can be adjusted according to the installation requirements of the image acquisition device 50. For example, the heat conduction portion 2121 can be a mounting block whose length direction is substantially the same as the height direction of the body 10, so that the first fisheye lens 521 and the second fisheye lens 523 can be respectively located at the top and bottom of the body 10. The heat conduction portion 2121 can be provided with a plurality of different types of mounting structures (such as mounting posts, mounting holes, etc.) for mounting the first fisheye lens 521, the second fisheye lens 523, or other structures of the image acquisition device 50. The heat conduction portion 2121 can be in contact with the image chip of the first fisheye lens 521 and the second fisheye lens 523, and the heat conduction efficiency is relatively high. The "contact" can include direct contact, indirect contact, etc. The present specification does not limit the specific structure of the heat conduction portion 2121. For example, the heat conduction portion 2121 can include only a metal shell or a plastic shell, which dissipates heat from the image acquisition device 50 through contact heat conduction. In some implementations, the heat conduction portion 2121 can include a metal shell or a plastic shell, and the heat conduction portion 2121 further includes a thermal conductive silicone provided between the metal shell or plastic shell and the image acquisition device 50.

The heat dissipation fins 2123 are provided on the side of the heat conduction portion 2121 facing the connecting frame 25. The side of the heat conduction portion 2121 facing the connecting frame 25 has a large area, so the number of heat dissipation fins 2123 can be set to larger, improving the heat dissipation effect. The heat dissipation fins 2123 are integrally formed with the heat conduction portion 2121, and transfer heat to the surrounding environment through convection and radiation. The plurality of heat dissipation fins 2123 further increase the heat dissipation area, improving the heat dissipation effect.

In this implementation, the bracket 20 can further include a protective shell 27. The protective shell 27 is connected to the heat conduction portion 2121 and surrounds at least part of the outer periphery of the first fisheye lens 521 and/or the second fisheye lens 523. The protective shell 27 is configured to protect the first fisheye lens 521 and/or the second fisheye lens 523 and to protect the internal components of the bracket 20. The protective shell 27 is connected to the heat conduction portion 2121. The present specification does not limit the specific material of the protective shell 27. For example, the protective shell 27 can be made of plastic, or can be made of a metal with good heat dissipation, such as aluminum, copper, etc. In some implementations, the protective shell 27 is a metal protective shell, and its surface is exposed to the outside and can be provided with a plurality of heat dissipation fins to increase the contact area with the outside and enhance the heat dissipation capacity; the mounting main body 21 and the protective shell 27 together form at least part of the heat dissipation structure, and the protective shell 27 can realize the heat dissipation function for the first fisheye lens 521 and/or the second fisheye lens 523 through better heat conduction performance. The protective shell 27 is provided on the side of the heat conduction portion 2121 facing the middle frame 123 and is set close to the heat dissipation gap 256. On the one hand, it improves the aesthetics of the UAV 100, and on the other hand, the width at the heat dissipation gap 256 is small, the airflow speed is relatively high, and the heat dissipation is faster. In addition, the extension direction of the heat dissipation fins 2123 is consistent with the extension direction of the heat dissipation gap 256, so that the airflow in the extension direction of the heat dissipation fins 2123 is consistent with the flow direction in the heat dissipation gap 256, and the channels between adjacent fins of the heat dissipation fins 2123 are in communication with the heat dissipation gap 256, further improving the heat dissipation effect.

In other implementations, the main body 12 can also be provided with an air inlet, and the air outlet of the air inlet is opposite to the bracket 20. The airflow entering the main body 12 through the air inlet can flow through the heat dissipation fins on the bracket 20 to further dissipate heat from the first fisheye lens 521 and/or the second fisheye lens 523, improving the heat dissipation efficiency. When the UAV 100 is in the flight state, the airflow driven by the rotation of the propeller 34 can also dissipate heat from the bracket 20 and the first fisheye lens 521 and/or the second fisheye lens 523 on it through the air inlet, further improving the heat dissipation effect.

The image acquisition device 50 is mounted on the bracket 20. The present specification does not limit the specific position of the bracket 20 relative to the main body 12. For example, the bracket 20 can be provided at the nose end 101, at the tail end 103, or at the middle section of the main body 12. In this implementation, the bracket 20 is provided at the nose end 101.

In this implementation, the image acquisition device 50 can include a panoramic module 52, and the panoramic module 52 is used for capturing panoramic images. The panoramic module 52 includes the above-mentioned first fisheye lens 521 and second fisheye lens 523. The first fisheye lens 521 is provided at the end of the heat conduction portion 2121 close to the upper shell 121, and the second fisheye lens 523 is provided at the end of the heat conduction portion 2121 close to the lower shell 125. The panoramic module 52 is placed on the outside of the main body 12 through the bracket 20, and is connected to the main body 12 through the bracket 20 with a heat dissipation structure, reducing the heat dissipation demand inside the main body 12, and at the same time, making full use of the external airflow to dissipate heat from the panoramic module 52. The first fisheye lens 521 and the second fisheye lens 523 are arranged along the yaw axis Y. When the UAV 100 is in the hovering state, the light-receiving side of the first fisheye lens 521 faces upward of the body 10, and the second fisheye lens 523 faces downward of the body 10.

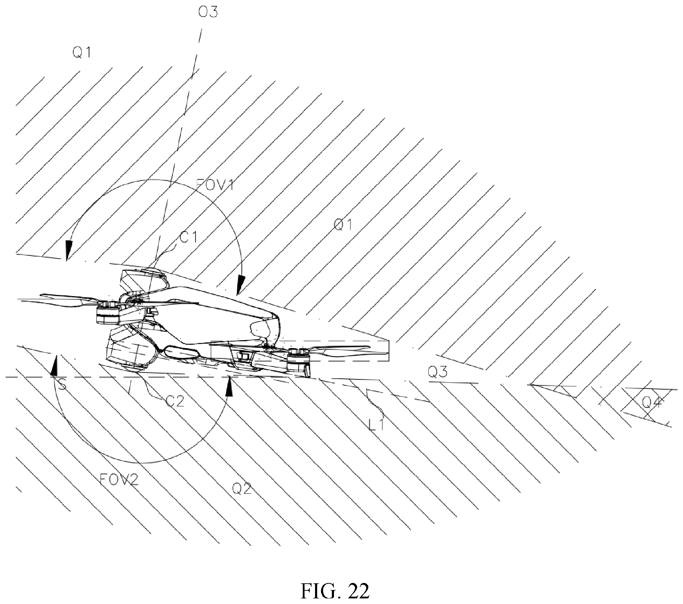

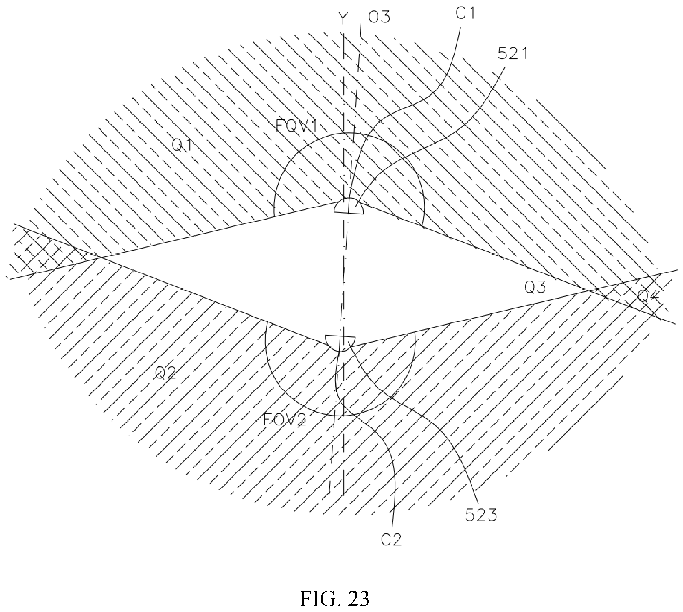

Please refer to FIG. 5, FIG. 22, and FIG. 23. The field of view FOV1 of the first fisheye lens 521 is greater than 180°, and the field of view FOV2 of the second fisheye lens 523 is greater than 180°. The fields of view of the first fisheye lens 521 and the second fisheye lens 523 partially overlap to acquire a panoramic image. To avoid other structures of the UAV 100 entering the field of view during shooting by the first fisheye lens 521 and the second fisheye lens 523, the first fisheye lens 521 protrudes from the outer surface of the upper shell 121, and the second fisheye lens 523 protrudes from the outer surface of the lower shell 125 to increase the fusion angle for stitching.

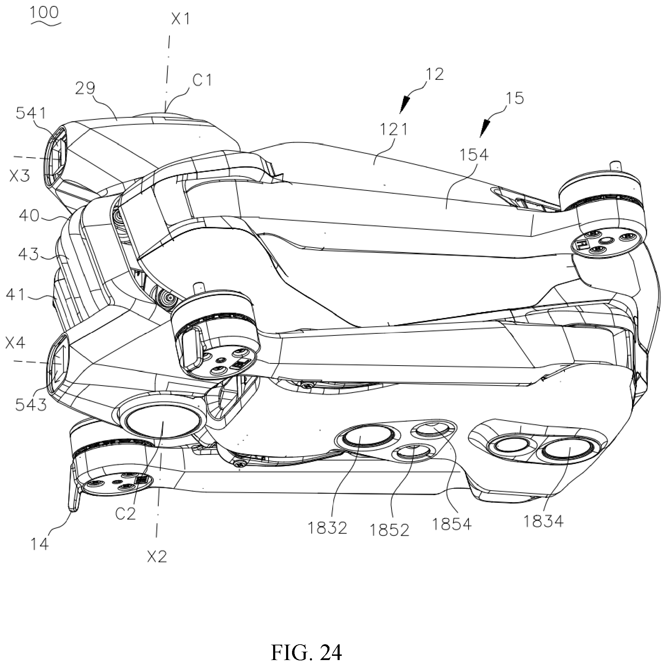

In this implementation, a virtual connection line of the optical centers of the first fisheye lens 521 and the second fisheye lens 523 forms a first axis O3. Please also refer to FIG. 20 and FIG. 24. The first fisheye lens 521 includes a first convex lens 5212, the optical center of the first fisheye lens 521 is the optical center of the first convex lens 5212, and the first convex lens 5212 has a first highest point C1 protruding relative to the main body 12. The second fisheye lens 523 includes a second convex lens 5232, the optical center of the second fisheye lens 523 is the optical center of the second convex lens 5232, and the second convex lens 5232 has a second highest point C2 protruding relative to the main body 12. The first highest point C1 and the second highest point C2 are both located on the first axis O3. When the optical axes of the first fisheye lens 521 and the second fisheye lens 523 are coaxial, the first highest point C1 and the second highest point C2 are both located on the first axis O3; and when the optical axes of the first fisheye lens 521 and the second fisheye lens 523 are not coaxial, the first axis O3 does not simultaneously pass through the first highest point C1 and the second highest point C2, or neither the first highest point C1 nor the second highest point C2 is on the first axis O3. Therefore, for ease of description, the vertical projection of the first highest point C1 on the first axis O3 is set as the first highest projection point, and the vertical projection of the second highest point C2 on the first axis O3 is set as the second highest projection point. If the optical axes of the first fisheye lens 521 and the second fisheye lens 523 are coaxial, the first highest projection point coincides with the first highest point C1, and the second highest projection point coincides with the second highest point C2.

In the flight state, the projections of all other structures of the UAV 100 on the first axis O3 fall between the first highest point C1 and the second highest point C2, or the projections of all other structures of the UAV 100 on the first axis O3 fall between the first highest projection point and the second highest projection point, so as to avoid entering the field of view of the first fisheye lens 521 and the second fisheye lens 523 during shooting. The projection direction of all other structures of the UAV 100 on the first axis O3 is perpendicular to the first axis O3, that is, projected onto the first axis O3 along a straight line L1 perpendicular to the first axis O3. Specifically, when the foldable arm 15 is in the unfolded state (as shown in FIG. 5), the projection of the body 10 on the first axis O3 falls between the first highest point C1 and the second highest point C2, or the projection of the body 10 on the first axis O3 falls between the first highest projection point and the second highest projection point. Furthermore, the projection of the movable support portion 141 on the foldable arm 15 on the first axis O3 falls between the first highest point C1 and the second highest point C2, or between the first highest projection point and the second highest projection point. When the foldable arm 15 is in the unfolded state, the projection of the swinging area of the propeller 34 on the first axis O3 falls between the first highest point C1 and the second highest point C2, or between the first highest projection point and the second highest projection point, so that the field of view of the first fisheye lens 521 and the second fisheye lens 523 will not be blocked by the blades of the propeller 34. When the foldable landing gear 13 is in the retracted state, the projection of the foldable landing gear 13 on the first axis O3 falls between the first highest point C1 and the second highest point C2, or between the first highest projection point and the second highest projection point.

To further ensure that in the flight state, all other structures of the UAV 100 will not block the field of view of the first fisheye lens 521 and the second fisheye lens 523, thus affecting the panoramic imaging effect. The first fisheye lens 521 has a first field of view region Q1, the second fisheye lens 523 has a second field of view region Q2, and the first field of view region Q1 and the second field of view region Q2 intersect to form a blind area of view Q3. When the UAV 100 is in the flight state, the at least three support portions 14 are positioned within the blind area of view Q3. When the UAV 100 is in the flight state, the movable support portion 141 is in the first position, and the at least three support portions 14 (as shown in FIG. 3) are positioned within the blind area of view Q3, that is, the at least three support portions 14 are not within the field of view of the second fisheye lens 523 and the first fisheye lens 521, and will not affect the panoramic imaging effect of the second fisheye lens 523 and the first fisheye lens 521. In this implementation, when the movable support portion 141 is in the second position, the UAV 100 can be in the parked state, and at least one support portion 14 is positioned outside the blind area of view Q3, or at least one support portion 14 is positioned within the first field of view region Q1 and the second field of view region Q2, so as to ensure stable support for the UAV 100 in the parked state and ensure that the second fisheye lens 523 will not contact the placement plane or be damaged by collision. In other implementations, as long as the second fisheye lens 523 does not contact the placement plane in the parked state, the at least three support portions 14 can also be positioned within the blind area of view Q3, further avoiding the impact of the support portions 14 on the panoramic imaging effect of the first fisheye lens 521 and the second fisheye lens 523.

To reduce the impact on the panoramic imaging quality of the image acquisition device 50, in this implementation, when the foldable arm 15 is in the unfolded state, the foldable arm 15 and the propulsion device 30 on it are both located within the blind area of view Q3, and when the foldable landing gear 13 is in the retracted state, it is located within the blind area of view Q3, and the main body 12 is also located within the blind area of view Q3. In some implementations, when the foldable landing gear 13 is in the supporting state, the free end 1343 is located within the second field of view region Q2.

The present specification does not limit the specific field of view FOV1 of the first fisheye lens 521 and the specific field of view FOV2 of the second fisheye lens 523. For example, the field of view FOV1 of the first fisheye lens 521 can fall within any one of the following angle ranges: (180°, 190°], [190°, 200°], [200°, 220°], [220°, 240°]. For example, the field of view FOV1 of the first fisheye lens 521 can be 185°, 190°, 195°, 200°, 210°, 215°, 220°, 230°, 240°, etc. The field of view FOV2 of the second fisheye lens 523 can fall within any one of the following angle ranges: (180°, 190°], [190°, 200°], [200°, 220°], [220°, 240°]. The field of view FOV2 of the second fisheye lens 523 can be 185°, 190°, 195°, 200°, 210°, 215°, 220°, 230°, 240°, etc. The field of view FOV2 of the second fisheye lens 523 can be the same as or different from the field of view FOV1 of the first fisheye lens 521. For example, when the field of view FOV1 of the first fisheye lens 521 is 190°, the field of view FOV2 of the second fisheye lens 523 can be 200°, 210°, 215°, etc.

The first field of view region Q1 and the second field of view region Q2 intersect to form an overlapping region Q4, and the angle of the overlapping region Q4 can fall within any one of the following angle ranges: (0°, 5°], [5°, 10°], [10°, 20°], [20°, 40°], [40°, 60°]. For example, the angle of the overlapping region Q4 can be 1°, 2°, 3°, 4°, 5°, 6°, 7°, 8°, 9°, 10°, 15°, 20°, 30°, 40°, 50°, 60°, etc.

As described above, the multiple arms 154 can rotate relative to the main body 12 to be in the folded state. To further reduce the space occupied by the UAV 100 during storage, as shown in FIG. 4 and FIG. 18, the left front arm 1542 and the left rear arm 1546 are arranged side by side along the yaw axis on the same side of the main body 12, and the right front arm 1544 and the right rear arm 1548 are arranged side by side along the yaw axis on the other side of the main body 12. That is, there is a height difference between the left front rotor 342 and the right front rotor 344 at the nose end 101 and the left rear rotor 346 and the right rear rotor 348 at the tail end 103. When the foldable arm 15 is in the unfolded state, the projection of the swinging area of the propeller 34 on the first axis O3 falls between the first highest point C1 and the second highest point C2. To compress the projection distance between the first highest point C1 and the second highest point C2 on the first axis O3, the first axis O3 is set obliquely.

Specifically, the first axis O3 intersects the yaw axis Y, the first fisheye lens 521 is inclined toward the tail end 103, and the second fisheye lens 523 is inclined toward the nose end 101. The distance between the projections of the first highest point C1 and the second highest point C2 on the first axis O3 is shortened, which on the one hand compresses the upper limit of the overall volume and weight of the UAV 100, making it lighter, and on the other hand reduces the stitching radius of the first field of view region Q1 and the second field of view region Q2, improving the stitching imaging quality. The present specification does not limit the specific range of the angle between the first axis O3 and the yaw axis Y. The angle between the first axis O3 and the yaw axis Y can fall within any one of the following angle ranges: (0°, 3°], [3°, 6°], [6°, 10°], [10°, 20°], [20°, 35°]. For example, the angle between the first axis O3 and the yaw axis Y can be 1°, 2°, 3°, 4°, 5°, 6°, 7°, 8°, 9°, 10°, 15°, 20°, 23°, 35°, etc.

In this implementation, the first fisheye lens 521 has a first optical axis X1, the second fisheye lens 523 has a second optical axis X2, the first optical axis X1 passes through the optical center of the first fisheye lens 521, and the second optical axis X2 passes through the optical center of the second fisheye lens 523. The present specification does not limit the specific positional relationship between the first optical axis X1 and the second optical axis X2. For example, the first optical axis X1 and the second optical axis X2 can be coaxial. When the first optical axis X1 and the second optical axis X2 are coaxial, the first axis O3, the first optical axis X1, and the second optical axis X2 are collinear, and the first highest point C1 and the second highest point C2 are also collinear. In some implementations, the first optical axis X1 and the second optical axis X2 can be parallel to each other, and the distance between the first optical axis X1 and the second optical axis X2 falls within any one of the following distance ranges: (0 mm, 1 mm], [1 mm, 5 mm], [5 mm, 10 mm], [10 mm, 20 mm], [20 mm, 50 mm], [50 mm, 100 mm]. The distance between the first optical axis X1 and the second optical axis X2 can be 1 mm, 3 mm, 5 mm, 7 mm, 8 mm, 10 mm, 13 mm, 16 mm, 20 mm, etc.

In other implementations, the first optical axis X1 and the second optical axis X2 can intersect or form skew lines, and the angle between the first optical axis X1 and the second optical axis X2 can fall within any one of the following angle ranges: (0°, 3°], [3°, 6°], [6°, 10°], [10°, 20°]. For example, the angle between the first optical axis X1 and the second optical axis X2 can be 1°, 2°, 3°, 4°, 5°, 6°, 7°, 8°, 9°, 10°, 15°, 20°, etc. "Intersect in different planes" can be understood as the first optical axis X1 and the second optical axis X2 not being in the same plane, and when the first optical axis X1 is projected onto the plane where the second optical axis X2 is located, the projection of the first optical axis X1 intersects the second optical axis X2.

Please also refer to FIG. 9 and FIG. 20. In this implementation, the image acquisition device 50 can further include a first obstacle avoidance module 54, and the first obstacle avoidance module 54 is provided on the bracket 20. In the flight state, the first obstacle avoidance module 54 is located on the front side of the body 10 and is used for environment recognition and obstacle avoidance. The first obstacle avoidance module 54 can include at least two cameras. For example, the first obstacle avoidance module 54 can include two cameras, three cameras, or four cameras. The combination of at least two cameras for obstacle avoidance can perceive the distance and depth of objects, which helps to more accurately measure the distance to obstacles, and the data processing of the first obstacle avoidance module 54 is data processing of the same dimension, the fusion algorithm is relatively simple, reducing the computational burden, reducing heat generation, or avoiding system crashes. The first obstacle avoidance module 54 can include a first front camera 541 and a second front camera 543 arranged at intervals, the first front camera 541 and the second front camera 543 are respectively connected to the bracket 20, and the first obstacle avoidance module 54 is placed outside the main body 12 through the bracket 20 and is connected to the main body 12 through the bracket 20 with a heat dissipation structure, reducing the heat dissipation demand inside the main body 12, and making full use of the external airflow to dissipate heat from the first obstacle avoidance module 54. The first front camera 541 and the second front camera 543 are located on the same side as the panoramic module 52. In other implementations, the first obstacle avoidance module 54 can also be directly connected to the middle frame 123.

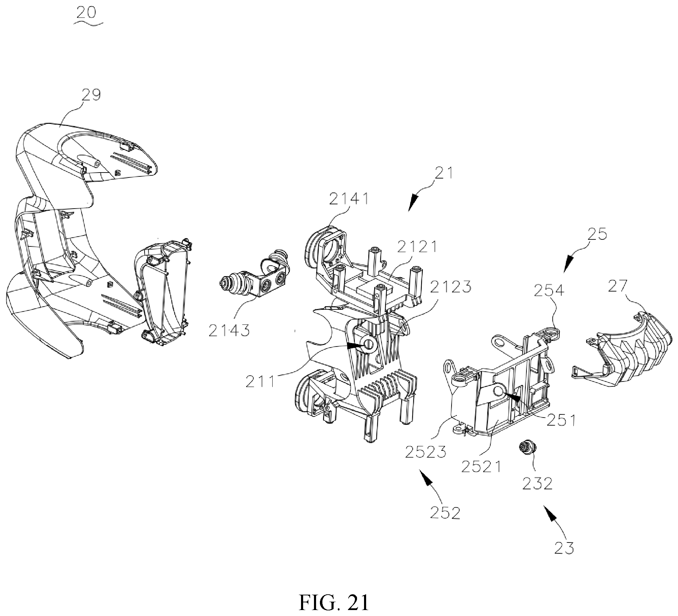

Please also refer to FIG. 20 and FIG. 21. The first obstacle avoidance module 54 is provided on the heat conduction portion 2121 of the bracket 20 and is located on the side of the heat conduction portion 2121 away from the connecting frame 25. The heat conduction portion 2121 can be provided with a lens mounting portion 2141 for mounting the first front camera 541 and the second front camera 543. The number of lens mounting portions 2141 is set to two, and the two lens mounting portions 2141 are arranged at intervals along the yaw axis Y. At least part of the structure of the first front camera 541 and the second front camera 543 is in direct contact with the heat conduction portion 2121, which is convenient for heat dissipation during the operation of the first obstacle avoidance module 54.

The heat conduction portion 2121 can also be provided with a shock-absorbing connection portion 2143, and at least two of the first mounting holes 211 on the mounting main body 21 can be provided on the shock-absorbing connection portion 2143, and one of the second shock-absorbing balls 232 in each group is connected to the corresponding shock-absorbing connection portion 2143. The bracket 20, the panoramic module 52, and the first obstacle avoidance module 54 together form a panoramic imaging module, which is not only easy to assemble and disassemble, but can also synchronously provide shock absorption for both the panoramic module 52 and the first obstacle avoidance module 54, improving the imaging effect, and at the same time, the mounting main body 21 can provide heat dissipation for both the panoramic module 52 and the first obstacle avoidance module 54, improving the heat dissipation performance of the panoramic module 52 and the first obstacle avoidance module 54.

Please also refer to FIG. 3, FIG. 5, and FIG. 21. In this implementation, the first front camera 541 and the second front camera 543 are respectively connected to the two lens mounting portions 2141, and the first front camera 541 and the second front camera 543 are arranged along the yaw axis Y. The first front camera 541 has a third optical axis X3 (as shown in FIG. 24), the second front camera 543 has a fourth optical axis X4, and the third optical axis X3 and/or the fourth optical axis X4 intersect the first axis O3. For example, the third optical axis X3 and/or the fourth optical axis X4 can be perpendicular to the first axis O3; or the third optical axis X3 and/or the fourth optical axis X4 are not perpendicular to the first axis O3. As an example, the angle between the third optical axis X3 and/or the fourth optical axis X4 and the first axis O3 can be 84°, 84.2°, 84.4°, 84.6°, 84.8°, 85°, 86°, 87°, 88°, 89°, etc.

The third optical axis X3 and/or the fourth optical axis X4 intersect the first plane c. When the UAV 100 is in the hovering state, the direction facing forward horizontally is set as the first vector direction E3, and the direction along the third optical axis X3 from the inside of the first front camera 541 to the light-receiving side of the first front camera 541 is set as the second vector direction E4. When the first vector direction E3 and the second vector direction E4 are constructed based on the optical center of the first front camera 541 (both the first vector direction E3 and the second vector direction E4 pass through the optical center), the first vector direction E3 and the second vector direction E4 intersect, and further, the second vector direction E4 is above the first vector direction E3 in space. The angle between the first vector direction E3 and the second vector direction E4 falls within any one of the following angle ranges: [0°, 3°], [3°, 6°], [6°, 10°], [10°, 20°], [20°, 35°]. For example, the angle between the first vector direction and the second vector direction can be 1°, 2°, 3°, 4°, 5°, 6°, 7°, 8°, 9°, 10°, 15°, 20°, 25°, 30°, 35°, etc.

The third optical axis X3 and/or the fourth optical axis X4 intersect the first plane c so that when the UAV 100 is in the hovering state, the light-receiving sides of the first front camera 541 and the second front camera 543 face obliquely upward of the UAV 100 (the second vector direction). When the UAV 100 is in the forward flight state, the light-receiving sides of the first front camera 541 and the second front camera 543 face forward of the UAV 100 (the first vector direction), and at this time, the third optical axis X3 and/or the fourth optical axis X4 are parallel to the horizontal plane S.

Therefore, the feature of the third optical axis X3 and/or the fourth optical axis X4 being set obliquely in the hovering state in this implementation increases the field of view of the first front camera 541 and/or the second front camera 543 when the UAV 100 is in the forward flight state, achieving a larger obstacle avoidance perception angle. Furthermore, in this implementation, the third optical axis X3 and/or the fourth optical axis X4 are perpendicular to the first axis O3, further increasing the obstacle avoidance perception angle and optimizing the obstacle avoidance effect.

The present specification does not limit the specific positional relationship between the third optical axis X3 and the fourth optical axis X4. For example, the third optical axis X3 can be parallel to the fourth optical axis X4; or the third optical axis X3 and the fourth optical axis X4 can also intersect or form skew lines. The present specification does not limit the specific range of the angle between the third optical axis X3 and the fourth optical axis X4. The angle between the third optical axis X3 and the fourth optical axis X4 can fall within any one of the following angle ranges: (0°, 3°], [3°, 6°], [6°, 10°], [10°, 20°]. For example, the angle between the third optical axis X3 and the fourth optical axis X4 can be 1°, 2°, 3°, 4°, 5°, 6°, 7°, 8°, 9°, 10°, 15°, 20°, etc.

Please also refer to FIG. 9, FIG. 21, and FIG. 24. In this implementation, the UAV 100 can further include an indicator light 40, which is provided on the bracket 20. When the UAV 100 is in the forward flight state, the indicator light 40 is located on the front side of the bracket 20. To facilitate the installation of the indicator light 40 and protect the image acquisition device 50, in this implementation, the bracket 20 can further include a front shell 29, and the indicator light 40 is mounted on the front shell 29. The front shell 29 is connected to the side of the heat conduction portion 2121 away from the connecting frame 25, and the front shell 29 is provided at the nose end 101.

The present specification does not limit the specific structure of the front shell 29. Both ends of the front shell 29 can be provided with mounting notches, which, together with the mounting notches of the protective shell 27, form mounting holes for mounting the first fisheye lens 521 and the second fisheye lens 523. The front shell 29 and the protective shell 27 improve the mounting stability of the first fisheye lens 521 and the second fisheye lens 523. The front shell 29 and the protective shell 27 together surround the outer periphery of the first fisheye lens 521 and/or the second fisheye lens 523. The present specification does not limit the angle surrounded by the front shell 29 and the protective shell 27. For example, the central angle of the mounting notch of the protective shell 27 can be 60°, 90°, 180°, etc. To reduce the weight of the front shell 29, the shape of the front shell 29 can be made to protrude at the positions corresponding to the first front camera 541 and the second front camera 543 to accommodate the first front camera 541 and the second front camera 543, and be recessed at other parts to reduce volume. The front shell 29 is provided with relief holes at the positions corresponding to the first front camera 541 and the second front camera 543 for shooting by the first front camera 541 and the second front camera 543.

The indicator light 40 is connected to the front shell 29 and is located between the first front camera 541 and the second front camera 543, so that the indicator light 40, the image acquisition device 50, and the bracket 20 are modularly arranged. During installation, the image acquisition device 50 can be installed on the bracket 20 first, then the indicator light 40 is installed on the bracket 20, so that the indicator light 40, the image acquisition device 50, and the bracket 20 form an integrated semi-finished module, which is then assembled onto the main body 12. The present specification does not limit the specific function of the indicator light 40. For example, the indicator light 40 can be configured to display the flight state. Specifically, the indicator light 40 is electrically connected to the main board 90, and the indicator light 40 includes one or more first light-emitting regions 41, and one or more first light-emitting regions 41 are configured to display the light effect corresponding to the flight state of the UAV 100 based on the instruction of the main board 90. One or more first light-emitting regions 41 can also be configured to display the light effect corresponding to the remaining power of the UAV 100. For example, when the UAV 100 is in the flight state, the first light-emitting region 41 displays a green light effect, and when the UAV 100 is in the parked state, the first light-emitting region 41 displays a yellow light effect.

In other implementations, the indicator light 40 can also be configured to display the power state. The indicator light 40 is electrically connected to the battery 80, and the indicator light 40 includes a plurality of second light-emitting regions 43, and the plurality of second light-emitting regions 43 are configured to display the light effect corresponding to the power state of the battery 80. For example, the number of second light-emitting regions 43 is set to five, and the five second light-emitting regions 43 are arranged side by side. When the battery 80 power is in the range of (80%, 100%], all five second light-emitting regions 43 are illuminated; when the battery 80 power is in the range of (60%, 80%], four second light-emitting regions 43 are illuminated; when the battery 80 power is in the range of (40%, 60%], three second light-emitting regions 43 are illuminated; when the battery 80 power is in the range of (20%, 40%], two second light-emitting regions 43 are illuminated; and when the battery 80 power is in the range of (0, 20%], one second light-emitting region 43 is illuminated.

In this implementation, the UAV 100 can further include a magnetometer 120, which is mounted on the bracket 20. The bracket 20 is located at the nose end 101, and the magnetometer 120 is far from the components installed inside the main body 12, reducing the influence of the magnetic field generated by the components inside the main body 12 and improving the accuracy of the magnetometer 120.

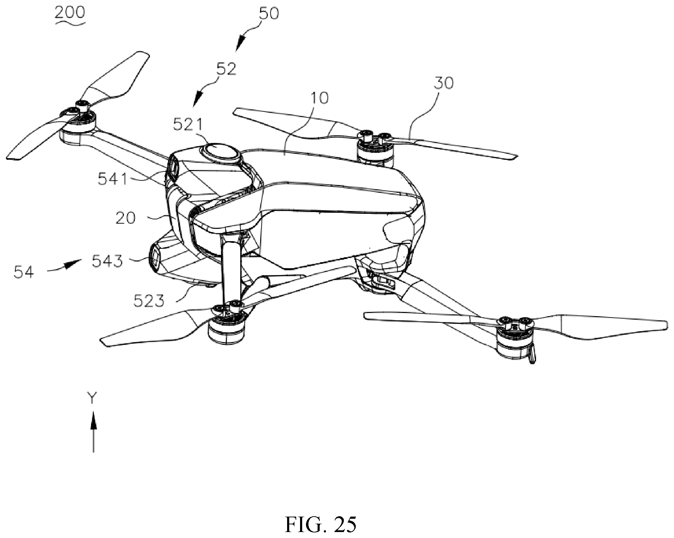

Please also refer to FIG. 25. The present disclosure further provides a panoramic imaging aircraft 200, which has a yaw axis Y, and the panoramic imaging aircraft 200 includes a body 10, a propulsion device 30, a bracket 20, and an image acquisition device 50. The propulsion device 30 is provided on the body 10 and is configured to provide thrust for the panoramic imaging aircraft 200 to fly. The bracket 20 is connected to the body 10. The image acquisition device 50 includes a panoramic module 52 and a binocular obstacle avoidance module 54, the panoramic module 52 and the binocular obstacle avoidance module 54 are both provided on the bracket 20, the panoramic module 52 includes a first fisheye lens 521 and a second fisheye lens 523, the first fisheye lens 521 and the second fisheye lens 523 are respectively located on two sides of the body 10 away from each other, and there is an overlap between the field of view ranges of the first fisheye lens 521 and the second fisheye lens 523 for acquiring a panoramic image. The binocular obstacle avoidance module 54 includes a first front camera 541 and a second front camera 543, the first front camera 541 and the second front camera 543 are both provided on the bracket 20, and the first front camera 541 and the second front camera 543 are arranged along the yaw axis Y.

The panoramic imaging aircraft 200 in this implementation can have one or more features of the UAV 100 provided in any of the above implementations. As long as there is no conflict, the features of the UAV 100 provided in any of the above implementations can be combined into the panoramic imaging aircraft 200. For example, the body 10 in this implementation can include one or more features of the body 10 described above, and the body 10 can include the foldable arm 15, the foldable landing gear 13, and other structures described above. The propulsion device 30 in this implementation can be understood as the propulsion device 30 provided in any of the above implementations and has one or more features of the propulsion device 30 described above. The bracket 20 in this implementation can be understood as the bracket 20 provided in any of the above implementations and has one or more features of the bracket 20 described above. The first fisheye lens 521 in this implementation can be understood as the first fisheye lens 521 provided in any of the above implementations and has one or more features of the first fisheye lens 521 described above. The second fisheye lens 523 in this implementation can be understood as the second fisheye lens 523 provided in any of the above implementations and has one or more features of the second fisheye lens 523 described above. The binocular obstacle avoidance module 54 in this implementation can be understood as the binocular obstacle avoidance module 54 provided in any of the above implementations and has one or more features of the binocular obstacle avoidance module 54 described above.

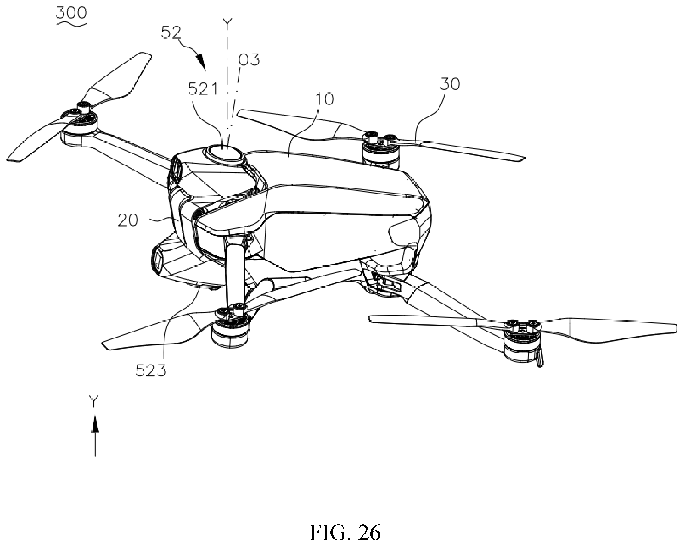

Please refer to FIG. 26. The present disclosure further provides a UAV 300, which can include a body 10, a propulsion device 30, a bracket 20, and a panoramic module 52. The propulsion device 30 is provided on the body 10 and is configured to provide thrust for the UAV 300 to fly. The bracket 20 is connected to the body 10. The panoramic module 52 includes a first fisheye lens 521 and a second fisheye lens 523, the first fisheye lens 521 and the second fisheye lens 523 are respectively connected to the bracket 20 and are connected to the body 10 through the bracket 20; and a virtual connection line of the optical centers of the first fisheye lens 521 and the second fisheye lens 523 forms a first axis O3, and the first axis O3 intersects the yaw axis Y.

The UAV 300 in this implementation can have one or more features of the UAV 100 provided in any of the above implementations. As long as there is no conflict, the features of the UAV 100 provided in any of the above implementations can be combined into the UAV 300 in this implementation. For example, the body 10 in this implementation can include one or more features of the body 10 provided in any of the above implementations. Specifically, the body 10 can include the foldable arm 15, the foldable landing gear 13, and other structures described above. The propulsion device 30 in this implementation can be understood as the propulsion device 30 provided in any of the above implementations and has one or more features of the propulsion device 30 described above. The bracket 20 in this implementation can be understood as the bracket 20 provided in any of the above implementations and has one or more features of the bracket 20 described above. The panoramic module 52 in this implementation can be understood as the panoramic module 52 provided in any of the above implementations and has one or more features of the panoramic module 52 described above.

The UAV 100 provided in the implementations of the present disclosure, when in use, the propulsion device 30 provides thrust for the UAV 100 to fly, so that the UAV 100 is in the flight state. The first fisheye lens 521 and the second fisheye lens 523 are respectively provided on two sides of the main body 12, that is, on the top and bottom of the main body 12, and the first fisheye lens 521 and the second fisheye lens 523 are configured to acquire panoramic images. When the UAV 100 is in the flight state, the movable support portion 141 is in the first position, and the at least three support portions 14 together define the reference plane a, and the reference plane a is higher than the lowest point of the second fisheye lens 523, thereby reducing the possibility of the three support portions 14 entering the field of view of the second fisheye lens 523. When the propulsion device 30 drives the UAV 100 to switch to the parked state, the movable support portion 141 is in the second position, and the at least three support portions 14 together define the support plane b, and the support plane b is located on the side of the second fisheye lens 523 away from the first fisheye lens 521. When the UAV 100 is placed on a placement plane, the support plane b defined by the at least three support portions 14 coincides with the placement plane, and the second fisheye lens 523 is located above the support plane b, that is, the second fisheye lens 523 will not contact the placement plane or be damaged by collision.

The UAV 100 provided in the implementations of the present disclosure can acquire panoramic images in the flight state and can also protect the second fisheye lens 523 in the parked state, reducing the possibility of the second fisheye lens 523 being damaged by contact or collision with the placement plane, thereby improving the service life of the second fisheye lens 523.

In the description of the present specification, reference to the terms "one implementation," "some implementations," "example," "specific example," or "some examples," etc., means that the specific features, structures, materials, or characteristics described in connection with the implementation or example are included in at least one implementation or example of the present disclosure. In the present specification, the schematic expressions of the above terms do not necessarily refer to the same implementation or example. Furthermore, the specific features, structures, materials, or characteristics described can be combined in any suitable manner in one or more implementations or examples. In addition, as long as there is no conflict, those skilled in the art can combine and combine different implementations or examples described in the present specification and the features of different implementations or examples.

Finally, it should be noted that the above implementations are only used to illustrate the technical solutions of the present disclosure, and not to limit them. Although the present disclosure has been described in detail with reference to the above implementations, those of ordinary skill in the art should understand that they can still modify the technical solutions described in the above implementations, or equivalently replace some technical features. Such modifications or replacements do not cause the essence of the corresponding technical solutions to depart from the spirit and scope of the technical solutions of the implementations of the present disclosure.

## Claims

1. An unmanned aerial vehicle (UAV), **characterized in that** the UAV has a yaw axis, and the UAV comprises:
a body, wherein the body comprises a main body and a foldable arm, the foldable arm is connected to the main body, and the foldable arm is configured to move relative to the main body to be in an unfolded state or a folded state;
a propulsion device disposed on the foldable arm, wherein the propulsion device is configured to provide thrust for the UAV to fly; and
a panoramic module disposed on the body, wherein the panoramic module comprises a first fisheye lens and a second fisheye lens, the first fisheye lens and the second fisheye lens are respectively disposed on two opposite sides of the body, a field of view of the first fisheye lens is greater than 180°, a field of view of the second fisheye lens is greater than 180°, a virtual connection line of optical centers of the first fisheye lens and the second fisheye lens forms a first axis, and the first axis intersects with the yaw axis.

2. The UAV according to claim 1, **characterized in that** the first fisheye lens comprises a first convex lens, the optical center of the first fisheye lens is an optical center of the first convex lens, and the first convex lens comprises a first highest point protruding from the main body,
wherein the second fisheye lens comprises a second convex lens, the optical center of the second fisheye lens is an optical center of the second convex lens, and the second convex lens comprises a second highest point protruding from the main body, and the first highest point and the second highest point are both positioned on the first axis.

3. The UAV according to claim 2, **characterized in that** when the foldable arm is in the unfolded state, a projection of the body on the first axis falls between the first highest point and the second highest point.

4. The UAV according to claim 2 or 3, **characterized in that** the propulsion device comprises a driving member and a propeller, the driving member is connected between the foldable arm and the propeller, and when the foldable arm is in the unfolded state, a projection of a swinging area of the propeller on the first axis falls between the first highest point and the second highest point.

5. The UAV according to any one of claims 2 to 4, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, a projection of the foldable landing gear on the first axis falls between the first highest point and the second highest point.

6. The UAV according to any one of claims 1 to 4, **characterized in that** the first fisheye lens comprises a first field of view region, the second fisheye lens comprises a second field of view region, and the first field of view region and the second field of view region intersect to form a blind area of view, and when the foldable arm is in the unfolded state, the foldable arm and the propulsion device are both positioned within the blind area of view.

7. The UAV according to claim 6, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, the foldable landing gear is positioned within the blind area of view.

8. The UAV according to claim 7, **characterized in that** when the UAV is in a flight state, the second fisheye lens is positioned on a side of the main body facing ground, the foldable landing gear comprises a connecting end and a free end, the connecting end is connected to the main body, and when the foldable landing gear moves relative to the main body, the free end is configured to move farther away from or closer to the main body, and when the foldable landing gear is in the supporting state, the free end is positioned in the second field of view region.

9. The UAV according to any one of claims 1 to 8, **characterized in that** an included angle between the first axis and the yaw axis falls within any one of the following angle ranges: (0°, 3°], [3°, 6°], [6°, 10°], [10°, 20°], or [20°, 35°].

10. The UAV according to any one of claims 1 to 9, **characterized in that** the first fisheye lens comprises a first optical axis, the second fisheye lens comprises a second optical axis, and the first optical axis and the second optical axis are coaxial.

11. The UAV according to any one of claims 1 to 10, **characterized in that** the first fisheye lens comprises a first optical axis, the second fisheye lens comprises a second optical axis, the first optical axis and the second optical axis are parallel, and a distance between the first optical axis and the second optical axis falls within any one of the following distance ranges: (0 mm, 1 mm], [1 mm, 5 mm], [5 mm, 10 mm], [10 mm, 20 mm], [20 mm, 50 mm], or [50 mm, 100 mm].

12. The UAV according to any one of claims 1 to 11, **characterized in that** the first fisheye lens comprises a first optical axis, the second fisheye lens comprises a second optical axis, and the first optical axis and the second optical axis being configured to intersect or form skew lines.

13. The UAV according to claim 12, **characterized in that** an included angle between the first optical axis and the second optical axis falls within any one of the following angle ranges: (0°, 3°], [3°, 6°], [6°, 10°], or [10°, 20°].

14. The UAV according to any one of claims 1 to 13, **characterized in that** the UAV further comprises a first obstacle avoidance module, and the first obstacle avoidance module comprises at least two cameras disposed on the body.

15. The UAV according to claim 14, **characterized in that** the first obstacle avoidance module comprises a first front camera and a second front camera, and the first front camera and the second front camera are both disposed on the body and arranged along the yaw axis.

16. The UAV according to claim 15, **characterized in that** the first front camera comprises a third optical axis, the second front camera comprises a fourth optical axis, and the third optical axis and/or the fourth optical axis intersect with the first axis.

17. The UAV according to claim 16, **characterized in that** the third optical axis and/or the fourth optical axis are/is perpendicular to the first axis.

18. The UAV according to any one of claims 15 to 17, **characterized in that** the first front camera comprises a third optical axis, the second front camera comprises a fourth optical axis, the UAV's pitch axis and roll axis jointly define a first plane, and the third optical axis and/or the fourth optical axis intersect(s) with the first plane.

19. The UAV according to any one of claims 15 to 17, **characterized in that** the first front camera comprises a third optical axis, the second front camera comprises a fourth optical axis, and the third optical axis is parallel to the fourth optical axis.

20. The UAV according to any one of claims 15 to 17, **characterized in that** the first front camera comprises a third optical axis, the second front camera comprises a fourth optical axis, and the third optical axis and the fourth optical axis are configured to intersect or form skew lines.

21. The UAV according to any one of claims 1 to 20, **characterized in that** a front end of the body in a forward flight direction of the UAV is defined as a nose end, and the first obstacle avoidance module is disposed at the nose end.

22. A panoramic imaging aircraft, **characterized in that** the panoramic imaging aircraft comprises a yaw axis, and the panoramic imaging aircraft comprises:
a body;
a propulsion device disposed on the body, wherein the propulsion device is configured to provide thrust for the panoramic imaging aircraft to fly;
a bracket connected to the body; and
an image acquisition device, wherein the image acquisition device comprises a panoramic module and a binocular obstacle avoidance module, the panoramic module and the binocular obstacle avoidance module are both disposed on the bracket, the panoramic module comprises a first fisheye lens and a second fisheye lens, the first fisheye lens and the second fisheye lens are respectively positioned on two sides of the body away from each other, and there is an overlap between field of view ranges of the first fisheye lens and the second fisheye lens for acquiring a panoramic image; the binocular obstacle avoidance module comprises a first front camera and a second front camera, the first front camera and the second front camera are both disposed on the bracket, and the first front camera and the second front camera are arranged along the yaw axis.

23. The panoramic imaging aircraft according to claim 22, **characterized in that** a virtual connection line of optical centers of the first fisheye lens and the second fisheye lens forms a first axis, the first fisheye lens comprises a first convex lens, the optical center of the first fisheye lens is an optical center of the first convex lens, and the first convex lens comprises a first highest point protruding from the main body,
wherein the second fisheye lens comprises a second convex lens, the optical center of the second fisheye lens is an optical center of the second convex lens, and the second convex lens comprises a second highest point protruding from the main body, and the first highest point and the second highest point are both positioned on the first axis.

24. The panoramic imaging aircraft according to claim 23, **characterized in that** the body comprises a main body and a foldable arm, the foldable arm is connected to the main body, and the foldable arm is configured to move relative to the main body to be in an unfolded state or a folded state, and when the foldable arm is in the unfolded state, a projection of the body on the first axis falls between the first highest point and the second highest point.

25. The panoramic imaging aircraft according to claim 24, **characterized in that** the propulsion device comprises a driving member and a propeller, the driving member is connected between the foldable arm and the propeller, and when the foldable arm is in the unfolded state, a projection of a swinging area of the propeller on the first axis falls between the first highest point and the second highest point.

26. The panoramic imaging aircraft according to claim 24 or 25, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, a projection of the foldable landing gear on the first axis falls between the first highest point and the second highest point.

27. The panoramic imaging aircraft according to claim 24 or 25, **characterized in that** the first fisheye lens comprises a first field of view region, the second fisheye lens comprises a second field of view region, and the first field of view region and the second field of view region intersect to form a blind area of view, and when the foldable arm is in the unfolded state, the foldable arm and the propulsion device are both positioned within the blind area of view.

28. The panoramic imaging aircraft according to claim 27, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, the foldable landing gear is positioned within the blind area of view.

29. The panoramic imaging aircraft according to claim 28, **characterized in that** when the panoramic imaging aircraft is in a flight state, the second fisheye lens is positioned on a side of the main body facing the ground, the foldable landing gear comprises a connecting end and a free end, the connecting end is connected to the main body, and when the foldable landing gear moves relative to the main body, the free end is configured to move farther away from or closer to the main body, and when the foldable landing gear is in the supporting state, the free end is positioned in the second field of view region.

30. The panoramic imaging aircraft according to any one of claims 23 to 29, **characterized in that** an included angle between the first axis and the yaw axis falls within any one of the following angle ranges: (0°, 3°], [3°, 6°], [6°, 10°], [10°, 20°], or [20°, 35°].

31. The panoramic imaging aircraft according to any one of claims 23 to 30, **characterized in that** the first fisheye lens comprises a first optical axis, the second fisheye lens comprises a second optical axis, and the first optical axis and the second optical axis are coaxial.

32. The panoramic imaging aircraft according to any one of claims 23 to 30, **characterized in that** the first fisheye lens comprises a first optical axis, the second fisheye lens comprises a second optical axis, the first optical axis and the second optical axis are parallel, and a distance between the first optical axis and the second optical axis falls within any one of the following distance ranges: (0 mm, 1 mm], [1 mm, 5 mm], [5 mm, 10 mm], [10 mm, 20 mm], [20 mm, 50 mm], or [50 mm, 100 mm].

33. The panoramic imaging aircraft according to any one of claims 23 to 30, **characterized in that** the first fisheye lens comprises a first optical axis, the second fisheye lens comprises a second optical axis, and the first optical axis and the second optical axis are configured to intersect or form skew lines.

34. The panoramic imaging aircraft according to claim 33, **characterized in that** an included angle between the first optical axis and the second optical axis falls within any one of the following angle ranges: (0°, 3°], [3°, 6°], [6°, 10°], or [10°, 20°].

35. The panoramic imaging aircraft according to any one of claims 23 to 34, **characterized in that** the first front camera comprises a third optical axis, the second front camera comprises a fourth optical axis, and the third optical axis and/or the fourth optical axis intersect(s) with the first axis.

36. The panoramic imaging aircraft according to claim 35, **characterized in that** the third optical axis and/or the fourth optical axis are/is perpendicular to the first axis.

37. The panoramic imaging aircraft according to any one of claims 23 to 36, **characterized in that** the first front camera comprises a third optical axis, the second front camera comprises a fourth optical axis, the panoramic imaging aircraft's pitch axis and roll axis jointly define a first plane, and the third optical axis and/or the fourth optical axis intersect(s) with the first plane.

38. The panoramic imaging aircraft according to any one of claims 23 to 37, **characterized in that** the first front camera comprises a third optical axis, the second front camera comprises a fourth optical axis, and the third optical axis is parallel to the fourth optical axis.

39. The panoramic imaging aircraft according to any one of claims 23 to 37, **characterized in that** the first front camera comprises a third optical axis, the second front camera comprises a fourth optical axis, and the third optical axis and the fourth optical axis are configured to intersect or form skew lines.

40. The panoramic imaging aircraft according to any one of claims 22 to 39, **characterized in that** a front end of the body in a forward flight direction of the panoramic imaging aircraft is defined as a nose end, and the binocular obstacle avoidance module is disposed at the nose end.

41. An unmanned aerial vehicle (UAV), **characterized in that** the UAV comprises:
a body;
a propulsion device disposed on the body, wherein the propulsion device is configured to provide thrust for the UAV to fly;
a bracket connected to the body; and
a panoramic module, wherein the panoramic module comprises a first fisheye lens and a second fisheye lens, the first fisheye lens and the second fisheye lens are respectively connected to the bracket and connected to the body through the bracket, and a virtual connection line of optical centers of the first fisheye lens and the second fisheye lens forms a first axis, and the first axis intersects with the yaw axis.

42. The UAV according to claim 41, wherein the first fisheye lens comprises a first convex lens, the optical center of the first fisheye lens is an optical center of the first convex lens, and the first convex lens comprises a first highest point protruding from a main body; and
wherein the second fisheye lens comprises a second convex lens, the optical center of the second fisheye lens is an optical center of the second convex lens, and the second convex lens comprises a second highest point protruding from the main body, and the first highest point and the second highest point are both positioned on the first axis.

43. The UAV according to claim 42, **characterized in that** the body comprises a main body and a foldable arm, the foldable arm is connected to the main body, and the foldable arm is configured to move relative to the main body to be in an unfolded state or a folded state, and when the foldable arm is in the unfolded state, a projection of the body on the first axis falls between the first highest point and the second highest point.

44. The UAV according to claim 43, **characterized in that** the propulsion device comprises a driving member and a propeller, the driving member is connected between the foldable arm and the propeller, and when the foldable arm is in the unfolded state, a projection of a swinging area of the propeller on the first axis falls between the first highest point and the second highest point.

45. The UAV according to claim 43 or 44, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, a projection of the foldable landing gear on the first axis falls between the first highest point and the second highest point.

46. The UAV according to claim 43 or 44, **characterized in that** the first fisheye lens comprises a first field of view region, the second fisheye lens comprises a second field of view region, and the first field of view region and the second field of view region intersect to form a blind area of view, and when the foldable arm is in the unfolded state, the foldable arm and the propulsion device are both positioned within the blind area of view.

47. The UAV according to claim 46, **characterized in that** the body further comprises a foldable landing gear, the foldable landing gear is connected to the main body, and the foldable landing gear is configured to move relative to the main body to be in a supporting state or a retracted state, and when the foldable landing gear is in the retracted state, the foldable landing gear is positioned within the blind area of view.

48. The UAV according to claim 47, **characterized in that** when the UAV is in a flight state, the second fisheye lens is positioned on a side of the main body facing the ground, the foldable landing gear comprises a connecting end and a free end, the connecting end is connected to the main body, and when the foldable landing gear moves relative to the main body, the free end is configured to move farther away from or closer to the main body, and when the foldable landing gear is in the supporting state, the free end is positioned in the second field of view region.

49. The UAV according to any one of claims 41 to 48, **characterized in that** an included angle between the first axis and the yaw axis falls within any one of the following angle ranges: (0°, 3°], [3°, 6°], [6°, 10°], [10°, 20°], or [20°, 35°].

50. The UAV according to any one of claims 41 to 49, **characterized in that** the first fisheye lens comprises a first optical axis, the second fisheye lens comprises a second optical axis, and the first optical axis and the second optical axis are coaxial.

51. The UAV according to any one of claims 41 to 49, **characterized in that** the first fisheye lens comprises a first optical axis, the second fisheye lens comprises a second optical axis, the first optical axis and the second optical axis are parallel, and a distance between the first optical axis and the second optical axis falls within any one of the following distance ranges: (0 mm, 1 mm], [1 mm, 5 mm], [5 mm, 10 mm], [10 mm, 20 mm], [20 mm, 50 mm], or [50 mm, 100 mm].

52. The UAV according to any one of claims 41 to 49, **characterized in that** the first fisheye lens comprises a first optical axis, the second fisheye lens comprises a second optical axis, and the first optical axis and the second optical axis are configured to intersect or form skew lines.

53. The UAV according to claim 52, **characterized in that** an included angle between the first optical axis and the second optical axis falls within any one of the following angle ranges: (0°, 3°], [3°, 6°], [6°, 10°], or [10°, 20°].

54. The UAV according to any one of claims 41 to 53, **characterized in that** the UAV further comprises a first obstacle avoidance module, and the first obstacle avoidance module comprises at least two cameras disposed on the body.

55. The UAV according to claim 54, **characterized in that** the first obstacle avoidance module comprises a first front camera and a second front camera, and the first front camera and the second front camera are both disposed on the body and arranged along the yaw axis.

56. The UAV according to claim 55, **characterized in that** the first front camera comprises a third optical axis, the second front camera comprises a fourth optical axis, and the third optical axis and/or the fourth optical axis intersect(s) with the first axis.

57. The UAV according to claim 56, **characterized in that** the third optical axis and/or the fourth optical axis are/is perpendicular to the first axis.

58. The UAV according to any one of claims 55 to 57, **characterized in that** the first front camera comprises a third optical axis, the second front camera comprises a fourth optical axis, the UAV's pitch axis and roll axis jointly define a first plane, and the third optical axis and/or the fourth optical axis intersect(s) with the first plane.

59. The UAV according to any one of claims 55 to 58, **characterized in that** the first front camera comprises a third optical axis, the second front camera comprises a fourth optical axis, and the third optical axis is parallel to the fourth optical axis.

60. The UAV according to any one of claims 55 to 58, **characterized in that** the first front camera comprises a third optical axis, the second front camera comprises a fourth optical axis, and the third optical axis and the fourth optical axis are configured to intersect or form skew lines.

61. The UAV according to any one of claims 54 to 60, **characterized in that** a front end of the body in a forward flight direction of the UAV is defined as a nose end, and the first obstacle avoidance module is disposed at the nose end.
